(19) **Europäisches Patentamt / European Patent Office / Office européen des brevets**

(11) **EP 4 213 424 A1**

(12) **EUROPEAN PATENT APPLICATION**
published in accordance with Art. 153(4) EPC

(43) Date of publication:
**19.07.2023 Bulletin 2023/29**

(21) Application number: **20958271.7**

(22) Date of filing: **22.10.2020**

(51) International Patent Classification (IPC):
**H04L 1/06** $^{(2006.01)}$     **H04B 7/06** $^{(2006.01)}$

(52) Cooperative Patent Classification (CPC):
**H04B 7/06; H04L 1/06**

(86) International application number:
**PCT/CN2020/123023**

(87) International publication number:
**WO 2022/082689 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LIU, Fengwei**
  **Shenzhen, Guangdong 518129 (CN)**
• **XU, Minghui**
  **Shenzhen, Guangdong 518129 (CN)**

(74) Representative: **Epping - Hermann - Fischer Patentanwaltsgesellschaft mbH Schloßschmidstraße 5 80639 München (DE)**

(54) **SIGNAL TRANSMISSION METHOD AND DEVICE**

(57) This application provides a signal transmission method and apparatus, to propose a diversity transmission solution. A transmitting end groups a plurality of modulation symbols into a plurality of groups of modulation symbols, and adds one or more preset symbols to each group of modulation symbols to obtain extended symbols. Then, the transmitting end performs second-level precoding on at least one group of extended symbols corresponding to each group of antenna ports, to obtain a symbol corresponding to each antenna port in each group of antenna ports. In second-level precoding, a dimension of a precoding matrix for each group of precoding antenna ports is related to a quantity of groups and a quantity of antenna ports included in the group of antenna ports. Finally, the transmitting end sends the symbol corresponding to each antenna port. Locations of a plurality of groups of modulation symbols corresponding to each group of antenna ports in the extended symbols do not overlap locations of at least one group of modulation symbols corresponding to any other group of antenna ports in the at least one group of extended symbols. Therefore, diversity transmission is implemented.

FIG. 3

## Description

### TECHNICAL FIELD

This application relates to the field of wireless communication technologies, and in particular, to a signal transmission method and apparatus.

### BACKGROUND

In a mobile communication system, multipath fading occurs in a signal transmitted between a terminal and a base station. Consequently, quality of a signal received by a receiving end is poor, or a signal cannot be received. For example, the terminal often operates in a city building complex or another complex geographical environment, and moves at any speed and in any direction. After a signal sent by a transmitting end (which may be the terminal or the base station) passes through a propagation path such as reflection and scattering, a signal arriving at the receiving end is usually a superimposition of a plurality of signals with different amplitudes and phases. As a result, an amplitude of the received signal fluctuates randomly, and multipath fading is caused. In addition, when a signal is blocked by a high building (for example, the terminal moves in front of a building away from the base station) or a terrain undulation, an amplitude of the received signal decreases. Moreover, a change of a meteorological condition also affects propagation of a signal, and consequently changes an amplitude and a phase of the received signal. All of the foregoing factors bring adverse impact on mobile communication.

To improve performance of the mobile communication system, diversity techniques (diversity techniques) may be used to improve quality of a received signal. According to the diversity techniques, a plurality of paths may be used to transmit signals. Same information is transmitted on the plurality of paths, and the plurality of paths have approximately equal average signal strengths and independent fading characteristics. After receiving the signals, the receiving end may combine the signals properly to greatly reduce impact of multipath fading, so that transmission reliability is improved.

Therefore, how to perform diversity transmission is a technical problem that needs to be resolved.

### SUMMARY

This application provides a signal transmission method and apparatus, to propose a diversity transmission solution.

According to a first aspect, a signal transmission method (which may also be referred to as a diversity communication method) is provided. First, a transmitting end groups n modulation symbols into M groups of modulation symbols, where M is an integer greater than or equal to 2, and n is an integer greater than or equal to 2. Then, the transmitting end adds one or more preset symbols to an $m^{th}$ group of modulation symbols, to obtain the $m^{th}$ group of extended symbols, where a value of m is an integer from 1 to M. It should be noted that locations of s groups of modulation symbols corresponding to a $g^{th}$ group of antenna ports in the s groups of extended symbols do not overlap locations of at least one group of modulation symbols corresponding to any other group of antenna ports in the at least one group of extended symbols. Then, the transmitting end performs second-level precoding on the s groups of extended symbols corresponding to the $g^{th}$ group of antenna ports, to obtain a symbol corresponding to each antenna port in the $g^{th}$ group of antenna ports. In second-level precoding, a dimension of a precoding matrix for a $g^{th}$ group of precoding antenna ports is related to s and a quantity of antenna ports included in the $g^{th}$ group of antenna ports. s is an integer greater than or equal to 1 and less than or equal to M, and g is an integer greater than or equal to 1. If g indicates an index of a group, g may alternatively start from 0. Finally, the transmitting end sends the symbol corresponding to each antenna port.

During extension, that the locations of the s groups of modulation symbols corresponding to the $g^{th}$ group of antenna ports in the s groups of extended symbols do not overlap locations of at least one group of modulation symbols corresponding to any other group of antenna ports in the at least one group of extended symbols is satisfied. Therefore, it can be ensured that an intersection set of subcarrier sets for transmitting a valid signal on any two groups of antenna ports is an empty set, so that diversity transmission is implemented. In addition, a plurality of modulation symbols are mapped to a plurality of groups. A same code block may be mapped to different groups by using inter-group interleaving, and further mapped to different frequency domain resources or different antennas, so that more robust and stable decoding performance is implemented. In addition, a diversity in frequency domain may be converted into a diversity on an antenna by using precoding, so that simultaneous diversity in space domain and frequency domain can be implemented, and a diversity gain is improved. In addition, precoding between different groups of antenna ports is independent of each other and does not affect each other. A characteristic of incoherence between antenna ports is used, so that performance is ensured, and a precoding dimension is reduced, and processing complexity of the transmitting end is reduced.

In a possible implementation, when sending the symbol corresponding to each antenna port, the transmitting end may specifically perform first processing on the symbol corresponding to each antenna port, and send the symbol. The first processing includes at least subcarrier mapping (which is mapping the symbol corresponding to each antenna port to a subcarrier corresponding to the antenna port), inverse discrete Fourier transform, inverse fast Fourier transform (inverse fast Fourier transform, IFFT), cyclic prefix (cyclic prefix, CP) addition, power adjustment, and the like.

In a possible implementation, in a group of antenna ports, locations of any group of modulation symbols in the group of extended symbols do not overlap locations of another group of modulation symbols in the another group of extended symbols.

In a possible implementation, in a group of antenna ports, locations of any group of modulation symbols in the group of extended symbols are the same as locations of another group of modulation symbols in the another group of extended symbols.

In a possible implementation, before adding the one or more preset symbols to the $m^{th}$ group of modulation symbols, to obtain the $m^{th}$ group of extended symbols, the transmitting end may further perform discrete Fourier transform (discrete Fourier transform, DFT) on the $m^{th}$ group of modulation symbols. Further, the transmitting end adds the one or more preset symbols to symbols obtained after DFT is performed on the $m^{th}$ group of modulation symbols, to obtain the $m^{th}$ group of extended symbols.

In a possible implementation, a size of the DFT is a quantity of symbols in the $m^{th}$ group of modulation symbols, instead of a quantity n of modulation symbols before grouping. The DFT matches a quantity of modulation symbols in each group, so that diversity space is reserved for subsequent diversity in frequency domain/space domain. In addition, a dimension of the DFT can be reduced, and difficulty and complexity of the DFT can be reduced.

In a possible implementation, M is greater than or equal to a quantity of groups of antenna ports, and M is less than or equal to a sum of quantities of antenna ports in the groups of antenna ports. There may be a plurality of choices for a quantity of M, so that grouping can be performed more flexibly.

In a possible implementation, locations of the $m^{th}$ group of modulation symbols (where if DFT is performed, the modulation symbols need to be replaced with symbols on which DFT is performed) in the $m^{th}$ group of extended modulation symbols are discontinuous. Alternatively, the locations are continuous. Alternatively, a part of the locations are continuous, and the other part of the locations are discontinuous. During grouping, a plurality of grouping manners may be referred to, so that grouping is more flexible.

In a possible implementation, the adding one or more preset symbols to an $m^{th}$ group of modulation symbols, to obtain the $m^{th}$ group of extended symbols may be specifically: adding x preset symbols to every y modulation symbols in the $m^{th}$ group of modulation symbols, to obtain the $m^{th}$ group of extended symbols, where y is an integer greater than or equal to 1, and x is an integer greater than or equal to 1. It should be noted that, if DFT is performed, the modulation symbols need to be replaced with symbols on which DFT is performed.

In a possible implementation, x is an integer multiple of y.

In a possible implementation, y is an integer multiple of a quantity of resource elements REs included in a resource block group RBG.

In a possible implementation, the transmitting end receives indication information, where the indication information is for determining the precoding matrix.

In a possible implementation, the indication information includes a precoding matrix index. The precoding matrix index indicates a precoding matrix in a precoding matrix set, and the precoding matrix set includes a precoding matrix for diversity transmission and a precoding matrix for non-diversity transmission. The set may alternatively be replaced with a group or a table. In this example, the precoding matrix for diversity transmission and the precoding matrix for non-diversity transmission are jointly indexed. In this way, in the method, only the precoding matrix index needs to be indicated, and the transmitting end can find the corresponding precoding matrix. This indication manner is simple and accurate.

In a possible implementation, the indication information includes a precoding matrix index and a diversity transmission indication. The diversity transmission indication may be an explicit indication, for example, an indication by using one bit. The diversity transmission indication may alternatively be an implicit waveform indication. For example, an orthogonal frequency division multiplexing (orthogonal frequency division multiplexing, OFDM) waveform corresponds to no diversity transmission, and a discrete Fourier transform-spread OFDM (discrete Fourier transform spread OFDM, DFT-s-OFDM) waveform corresponds to diversity transmission. In this way, when determining to perform diversity transmission, the transmitting end may search a precoding matrix that is for diversity transmission for a precoding matrix corresponding to the precoding matrix index, and does not incorrectly search a precoding matrix that is for non-diversity transmission for the precoding matrix.

In a possible implementation, the indication information includes a precoding matrix index and an identifier of a precoding matrix set. A precoding matrix in the identified precoding matrix set is for diversity transmission. In this way, the transmitting end may search the precoding matrix set identified by the identifier for a precoding matrix corresponding to the precoding matrix index.

In a possible implementation, before performing second-level precoding on the s groups of extended symbols corresponding to the gth group of antenna ports, to obtain the symbol corresponding to each antenna port in the gth group of antenna ports, the transmitting end may further perform first-level precoding on v groups of extended symbols. A size of a precoding matrix for first-level precoding is v*v, and an element in the precoding matrix for first-level precoding is 0 and/or 1. First-level precoding may implement selection of an antenna port or a group of antenna ports. In a possible implementation, the precoding matrix for first-level precoding is a diagonal matrix or an anti-diagonal matrix. In a possible implementation, the precoding matrix for first-level precoding is a block diagonal matrix or a block anti-diagonal matrix.

In a possible implementation, a block on a diagonal or an anti diagonal in the block diagonal matrix is a unit matrix whose size is a quantity of antenna ports in a group of antenna ports. In other words, "block" is a unit matrix, and both a quantity of rows and a quantity of columns in the unit matrix are a quantity of antenna ports in a group of antenna ports.

In a possible implementation, the transmitting end generates a modulation symbol by using the following formula:

$$d(i) = \frac{e^{j\frac{\pi}{2}\left(\left\lfloor\frac{i}{M}\right\rfloor mod\ 2\right)}}{\sqrt{2}}\left(\left(1 - 2b(i)\right) + j\left(1 - 2b(i)\right)\right)$$

, where b represents a bit sequence, b(i) is an ith bit in the bit sequence, i is an integer greater than or equal to 0, d(i) is a modulation symbol corresponding to $b(i)$, $\lfloor i/M \rfloor$ represents rounding down i/M to the nearest integer, and j is an imaginary part.

In a possible implementation, before adding the one or more preset symbols to the mth group of modulation symbols, to obtain the mth group of extended symbols, the transmitting end may further filter out the first L1 symbols and/or the last L2 symbols in the mth group of modulation symbols, where L1 is an integer greater than or equal to 1, and L2 is an integer greater than or equal to 1.

In a possible implementation, the transmitting end receives indication information. The indication information indicates a truncation factor, and a value of L1 and a value of L2 are both determined based on the truncation factor. According to a second aspect, a signal transmission (diversity communication) method is provided. First, a transmitting end groups n modulation symbols into M groups of modulation symbols, where M is an integer greater than or equal to 2, and n is an integer greater than or equal to 2. Then, the transmitting end performs second-level precoding on s groups of modulation symbols corresponding to a gth group of antenna ports, to obtain a symbol corresponding to each antenna port in the gth group of antenna ports. In second-level precoding, a dimension of a precoding matrix for a gth group of precoding antenna ports is related to s and a quantity of antenna ports included in the gth group of antenna ports. s is an integer greater than or equal to 1 and less than or equal to M, and g is an integer greater than or equal to 1. If g indicates an index of a group, g may alternatively start from 0. Then, the transmitting end maps the symbol corresponding to each antenna port to a subcarrier corresponding to the antenna port, and sends the symbol. Subcarriers corresponding to any two groups of antenna ports do not overlap.

Subcarriers for sending a signal on any two groups of antenna ports do not overlap, so that diversity transmission is implemented. In addition, a plurality of modulation symbols are mapped to a plurality of groups. A same code block may be mapped to different groups by using inter-group interleaving, and further mapped to different frequency domain resources or different antennas, so that more robust and stable decoding performance is implemented. In addition, a diversity in frequency domain may be converted into a diversity on an antenna by using precoding, so that simultaneous diversity in space domain and frequency domain can be implemented, and a diversity gain is improved. In addition, precoding between different groups of antenna ports is independent of each other and does not affect each other. A characteristic of incoherence between antenna ports is used, so that performance is ensured, and a precoding dimension is reduced, and processing complexity of the transmitting end is reduced.

In a possible implementation, locations of subcarriers corresponding to any group of antenna ports in a scheduled bandwidth are discontinuous. Alternatively, locations of subcarriers corresponding to any group of antenna ports in a scheduled bandwidth are continuous. Alternatively, a part of locations of subcarriers corresponding to any group of antenna ports in a scheduled bandwidth are continuous, and the other part of the locations are discontinuous.

In a possible implementation, subcarriers corresponding to any two antenna ports in a group of antenna ports do not overlap; or subcarriers corresponding to any two antenna ports in a group of antenna ports are the same.

In a possible implementation, before performing second-level precoding on the s groups of modulation symbols corresponding to the gth group of antenna ports, to obtain the symbol corresponding to each antenna port in the gth group of antenna ports, the transmitting end may further perform discrete Fourier transform DFT on an mth group of modulation symbols.

In a possible implementation, a size of the DFT is a quantity of symbols in the mth group of modulation symbols, instead of a quantity n of modulation symbols before grouping. The DFT matches a quantity of modulation symbols in each group, so that diversity space is reserved for subsequent diversity in frequency domain/space domain. In addition, a dimension of the DFT can be reduced, and difficulty and complexity of the DFT can be reduced.

In a possible implementation, M is greater than or equal to a quantity of groups of antenna ports, and M is less than or equal to a sum of quantities of antenna ports in the groups of antenna ports. There may be a plurality of choices for a quantity of M, so that grouping can be performed more flexibly.

In a possible implementation, the transmitting end receives indication information, where the indication information is for determining the precoding matrix.

In a possible implementation, the indication information includes a precoding matrix index. The precoding matrix index indicates a precoding matrix in a precoding matrix set, and the precoding matrix set includes a precoding matrix for diversity transmission and a precoding matrix for non-diversity transmission. The set can alternatively be replaced with a group or a table. In this example, the precoding matrix for diversity transmission and the precoding matrix for non-diversity transmission are jointly indexed. In this way, in the method, only the precoding matrix index needs to be indicated, and the transmitting end can find the corresponding precoding matrix. This indication manner is simple and accurate.

In a possible implementation, the indication information includes a precoding matrix index and a diversity transmission indication. The diversity transmission indication may be an explicit indication, for example, an indication by using one bit. The diversity transmission indication may alternatively be an implicit waveform indication. For example, an orthogonal frequency division multiplexing (orthogonal frequency division multiplexing, OFDM) waveform corresponds to no diversity transmission, and a discrete Fourier transform-spread OFDM (discrete Fourier transform spread OFDM, DFT-s-OFDM) waveform corresponds to diversity transmission. In this way, when determining to perform diversity transmission, the transmitting end may search a precoding matrix that is for diversity transmission for a precoding matrix corresponding to the precoding matrix index, and does not incorrectly search a precoding matrix that is for non-diversity transmission for the precoding matrix.

In a possible implementation, the indication information includes a precoding matrix index and an identifier of a precoding matrix set. A precoding matrix in the identified precoding matrix set is for diversity transmission. In this way, the transmitting end may search the precoding matrix set identified by the identifier for a precoding matrix corresponding to the precoding matrix index.

In a possible implementation, before performing second-level precoding on the s groups of modulation symbols (or symbols on which DFT is performed) corresponding to the g$^{th}$ group of antenna ports, to obtain the symbol corresponding to each antenna port in the g$^{th}$ group of antenna ports, the transmitting end may further perform first-level precoding on v groups of modulation symbols (or symbols on which DFT is performed). A size of a precoding matrix for first-level precoding is v*v, and an element in the precoding matrix for first-level precoding is 0 and/or 1. First-level precoding may implement selection of an antenna port or a group of antenna ports.

In a possible implementation, the precoding matrix for first-level precoding is a diagonal matrix or an anti-diagonal matrix.

In a possible implementation, the precoding matrix for first-level precoding is a block diagonal matrix or a block anti-diagonal matrix.

In a possible implementation, a block in the block diagonal matrix is a unit matrix whose size is a quantity of antenna ports in a group of antenna ports. To be specific, a block on a diagonal or an anti diagonal in the block diagonal matrix is a unit matrix, where both a quantity of rows and a quantity of columns in the unit matrix are a quantity of antenna ports in a group of antenna ports.

In a possible implementation, the transmitting end generates a modulation symbol by using the following formula:

$$d(i) = \frac{e^{j\frac{\pi}{2}mod\left(\left\lfloor\frac{i}{M}\right\rfloor mod\ 2\right)}}{\sqrt{2}}\left((1-2b(i))+j(1-2b(i))\right)$$

, where b represents a bit sequence, $b(i)$ is an i$^{th}$ bit in the bit sequence, i is an integer greater than or equal to 0, d(i) is a modulation symbol corresponding to $b(i)$, $\lfloor i/M \rfloor$ represents rounding down i/M to the nearest integer, and j is an imaginary part.

In a possible implementation, before performing second-level precoding on the s groups of modulation symbols corresponding to the g$^{th}$ group of antenna ports, to obtain the symbol corresponding to each antenna port in the g$^{th}$ group of antenna ports, the transmitting end may further filter out the first L1 symbols and/or the last L2 symbols in the m$^{th}$ group of modulation symbols, where L1 is an integer greater than or equal to 1, and L2 is an integer greater than or equal to 1.

In a possible implementation, the transmitting end receives indication information. The indication information indicates a truncation factor, and a value of L1 and a value of L2 are both determined based on the truncation factor. According to a third aspect, a communication apparatus is provided. The apparatus has a function of implementing any one of the first aspect and the possible implementations of the first aspect, or a function of implementing any one of the second aspect and the possible implementations of the second aspect. The function may be implemented by hardware, or may be implemented by hardware by executing corresponding software. The hardware or software includes one or more functional modules corresponding to the foregoing function.

According to a fourth aspect, a communication apparatus is provided, including a processor and a memory. The memory is configured to store a computer program or instructions. The processor is configured to execute a part or all of the computer program or the instructions in the memory. When the part or all of the computer program or the instructions are executed, the processor is configured to implement a function of the transmitting end in the method according to any one of the first aspect or the possible implementations of the first aspect, or implement a function of the transmitting end in any one of the second aspect or the possible implementations of the second aspect.

In a possible implementation, the apparatus may further include a transceiver. The transceiver is configured to send a signal processed by the processor, or receive a signal input to the processor. The transceiver may perform a sending action or a receiving action performed by the transmitting end in any one of the first aspect or the possible implementations of the first aspect, or perform a sending action or a receiving action performed by the transmitting end in any one of the second aspect or the possible implementations of the second aspect.

According to a fifth aspect, this application provides a chip system. The chip system includes one or more processors (which may also be referred to as processing circuits), and the processor is electrically coupled to a memory (which may also be referred to as a storage medium). The memory may be located in the chip system, or may not be located in the chip system. The memory is configured to store a computer program or instructions. The processor is configured to execute a part or all of the computer program or the instructions in the memory. When the part or all of the computer program or the instructions are executed, the processor is configured to implement a function of the transmitting end in the method according to any one of the first aspect or the possible implementations of the first aspect, or implement a function of the transmitting end in any one of the second aspect or the possible implementations of the second aspect. In a possible implementation, the chip system may further include an input/output interface, and the input/output interface is configured to output a signal processed by the processor, or receive a signal input to the processor. The input/output interface may perform a sending action or a receiving action performed by the transmitting end in any one of the first aspect or the possible implementations of the first aspect, or perform a sending action or a receiving action performed by the transmitting end in any one of the second aspect or the possible implementations of the second aspect. Specifically, the output interface performs the sending action, and the input interface performs the receiving action.

In a possible implementation, the chip system may include a chip, or may include a chip and another discrete device. According to a sixth aspect, a computer-readable storage medium is provided, configured to store a computer program. The computer program includes instructions for implementing a function in any one of the first aspect or the possible implementations of the first aspect, or instructions for implementing a function in any one of the second aspect or the possible implementations of the second aspect.

Alternatively, a computer-readable storage medium is provided, configured to store a computer program. When the computer program is executed by a computer, the computer is enabled to perform the method performed by the transmitting end in the method according to any one of the first aspect or the possible implementations of the first aspect, or perform the method performed by the transmitting end in the method according to any one of the second aspect and the possible implementations of the second aspect.

According to a seventh aspect, a computer program product is provided. The computer program product includes computer program code. When the computer program code is run on a computer, the computer is enabled to perform the method performed by the transmitting end in any one of the first aspect or the possible implementations of the first aspect, or perform the method performed by the transmitting end in any one of the second aspect and the possible implementations of the second aspect.

According to an eighth aspect, a communication apparatus is provided, including a processor. The processor is configured to execute a computer program or instructions. When the computer program or the instructions are executed, the processor is configured to implement a function of the transmitting end in the method according to any one of the first aspect or the possible implementations of the first aspect, or implement a function of the transmitting end in the method according to any one of the second aspect or the possible implementations of the second aspect. The computer program or the instructions may be stored in the processor, or may be stored in a memory, where the memory is coupled to the processor. The memory may be located in the communication apparatus, or may not be located in the communication apparatus.

In a possible implementation, the apparatus further includes a communication interface. The communication interface is configured to send a signal processed by the processor, or receive a signal input to the processor. The communication interface may perform a sending action or a receiving action performed by the transmitting end in any one of the first aspect or the possible implementations of the first aspect, or perform a sending action or a receiving action performed by the transmitting end in any one of the second aspect or the possible implementations of the second aspect.

For technical effects of the third aspect to the eighth aspect, refer to the descriptions of the first aspect and the second aspect. Details are not described herein again.

**BRIEF DESCRIPTION OF DRAWINGS**

FIG. 1 is a schematic diagram of a communication system according to an embodiment of this application;

FIG. 2 is a schematic diagram of a process of small delay-cyclic delay diversity SD-CDD diversity communication according to an embodiment of this application;

FIG. 3 is a schematic diagram of a diversity communication process according to an embodiment of this application;

FIG. 4a, FIG. 4b, FIG. 4c, FIG. 4d, and FIG. 4e each are schematic diagrams of a diversity communication process according to an embodiment of this application;

FIG. 5a, FIG. 5b, and FIG. 5c each show a grouping manner according to an embodiment of this application;

FIG. 6a, FIG. 6b, and FIG. 6c each show an extension manner according to an embodiment of this application;

FIG. 7 is a schematic diagram of truncation filtering according to an embodiment of this application;

FIG. 8 is a schematic diagram of a diversity communication process according to an embodiment of this application;

FIG. 9 is a schematic diagram of a structure of a diversity communication apparatus according to an embodiment of this application;

FIG. 10 is a schematic diagram of a structure of a diversity communication apparatus according to an embodiment of this application; and

FIG. 11 is a schematic diagram of a structure of a terminal according to an embodiment of this application.

## DESCRIPTION OF EMBODIMENTS

The following describes in detail embodiments of this application with reference to accompanying drawings.

For ease of understanding the technical solutions in embodiments of this application, the following briefly describes a system architecture of a diversity communication method provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a world interoperability for microwave access (worldwide interoperability for microwave access, WiMAX) communication system, a 5th generation (5th generation, 5G) system, a new radio (new radio, NR) system, or a future communication system

For ease of understanding embodiments of this application, the following describes an application scenario of this application. A network architecture and a service scenario described in embodiments of this application are intended to describe the technical solutions in embodiments of this application more clearly, and do not constitute a limitation on the technical solutions provided in embodiments of this application. A person of ordinary skill in the art may know that, as a new service scenario emerges, the technical solutions provided in embodiments of this application are also applicable to a similar technical problem.

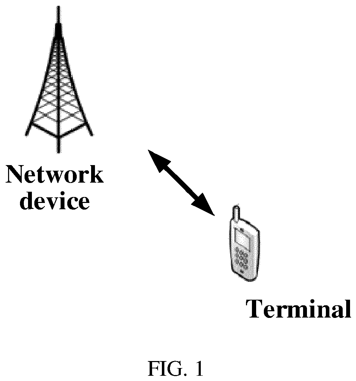

A communication system shown in FIG. 1 includes a network device and a terminal. The network device and the terminal may perform wireless communication by using an air interface resource. The air interface resource may include one or more of a time domain resource, a frequency domain resource, a code domain resource, and a space domain resource. In addition, this application is alternatively applicable to a communication system between terminals or a communication system between network devices.

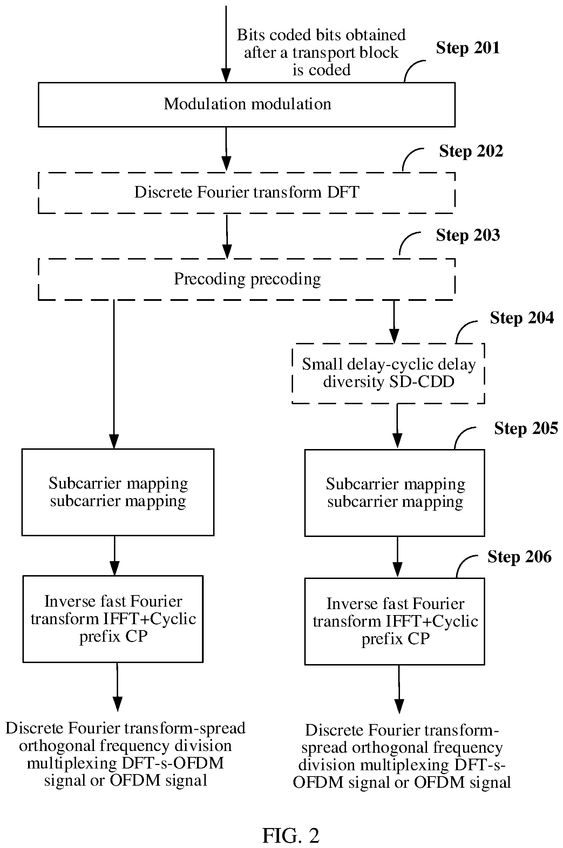

To improve performance of a mobile communication system, a diversity technology (diversity technology) may be used to improve quality of a received signal. FIG. 2 is a schematic diagram of a process of small delay-cyclic delay diversity (small delay-cyclic delay diversity, SD-CDD) diversity communication. The process specifically includes the following steps.

Step 201: A transmitting end performs modulation (modulation) on a plurality of bits (coded bits) obtained after processing such as coding is performed on a transport block (transport block, TB), to obtain a plurality of modulated symbols that may be referred to as modulation symbols, where the modulation symbols may also be referred to as complex (complex) symbols.

When the transmitting end sends data to a receiving end, the transmitting end may perform an operation such as cyclic redundancy check (cyclic redundancy check, CRC) addition, channel coding, code block segmentation, rate matching, data control multiplexing, and scrambling on the transport block, to obtain the plurality of coded bits. Then, the transmitting end modulates the coded bits, that is, performing constellation mapping, to obtain the plurality of modulation symbols. A modulation manner may be, for example, quadrature amplitude modulation (quadrature amplitude modulation, QAM), offset quadrature amplitude modulation (offset quadrature amplitude modulation, OQAM), binary phase shift keying (binary phase shift keying, BPSK), pi/2-BPSK, QPSK, pi/4-QPSK, 16 QAM, 64 QAM, 256 QAM, 1024 QAM, or amplitude phase shift keying (amplitude phase shift keying, APSK). A modulation order may be 1, 2, 4, 6, 8, or the like, and the modulation order is related to the modulation manner. The modulation manner and the modulation order are not limited in this application.

Step 202: The transmitting end performs discrete Fourier transform DFT on the plurality of modulation symbols. A DFT operation may also be referred to as "switching precoding, converting precoding, or transform precoding (transform precoding)". Step 202 is optional. If DFT is not performed, an OFDM signal is finally obtained. If DFT is performed, a DFT-s-OFDM signal is finally obtained. A symbol on which DFT is performed may be referred to as a complex symbol or the like.

In an example, the transmitting end may group the modulation symbols, and perform DFT by using a group as a unit. For example, the modulation symbols may be grouped based on DFT-s-OFDM, and modulation symbols of same DFT-s-OFDM are grouped into one group through division. For example, in step 201, a quantity of modulated symbols is 1200, a DFT-s-OFDM scheduled bandwidth is 10 resource blocks (resource blocks, RBs), and one resource block RB includes 12 resource elements REs. In this case, each group includes 120 modulation symbols, and 120-point DFT is performed on each group to transform each group to frequency domain.

Step 203: Perform precoding (precoding) on the symbols on which DFT is performed, and map the symbols to a plurality of antenna ports.

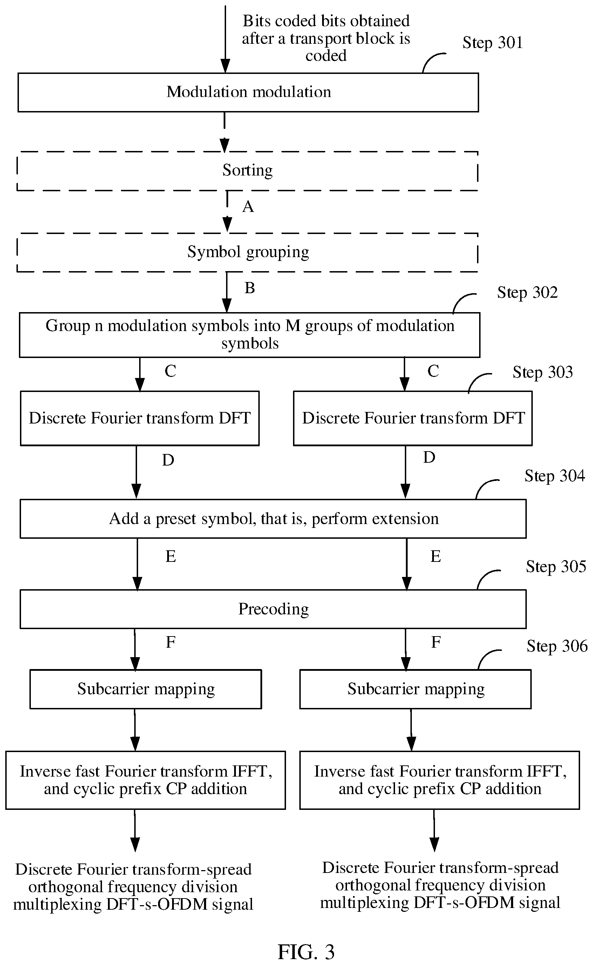

In FIG. 2, two antenna ports are used as an example for description. During actual application, there may be more antenna ports, for example, four or eight antenna ports. Optionally, the symbols obtained in step 202 may be directly mapped to the plurality of antenna ports without precoding in step 203. Therefore, step 203 is optional. The precoding herein may be precoding for non-codebook-based transmission, or precoding for codebook-based transmission. Symbols mapped to the two antenna ports are the same or different, depending on an element in a precoding matrix. It should be noted that, in the example of FIG. 2, the precoding matrix is selected based on a quantity of antenna ports. However, in an example in FIG. 3 described below, the precoding matrix is selected based on a quantity of antenna ports included in a group of antenna ports.

Step 204: Perform an SD-CDD operation on one of antennas (namely, one antenna port), where a time domain shift (namely, a cyclic shift) is usually caused equivalently by using frequency domain weighting.

Step 205: Map a symbol on each antenna port to a frequency domain resource corresponding to the antenna port, that is, perform subcarrier mapping (subcarrier mapping).

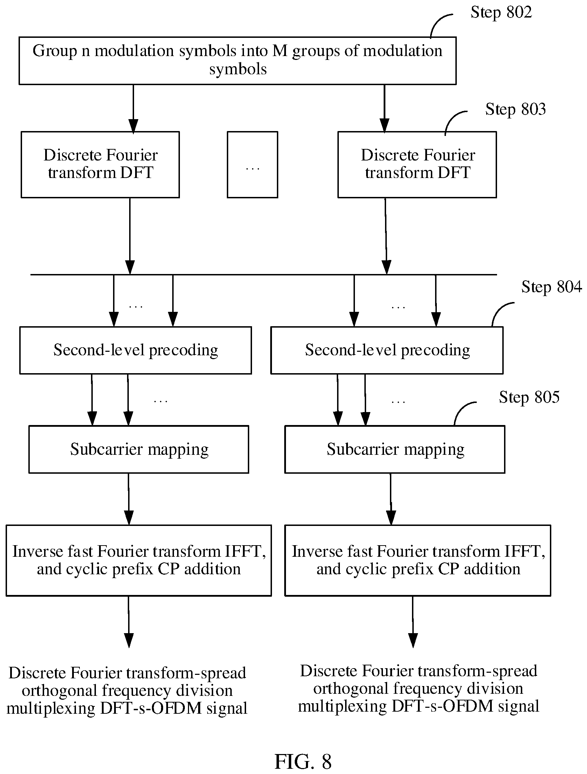

It should be noted that, in the example in FIG. 2, frequency domain resources corresponding to the two antenna ports are completely the same. However, in an example in FIG. 8 described below, frequency domain resources corresponding to different antenna ports do not overlap, that is, are different.

Step 206: Perform operations such as inverse fast Fourier transform (inverse fast Fourier transform, IFFT) and cyclic prefix (cyclic prefix, CP) addition on a frequency domain signal obtained after frequency domain resource mapping, to obtain a DFTs-OFDM signal or an OFDM signal. Then, the DFTs-OFDM signal or the OFDM signal may be sent on a corresponding antenna port.

In the SD-CDD diversity communication solution, although the two signals are sent out one by one through the operation performed by the SD-CDD in step 204, time domain resources occupied by the two signals are still the same. The two signals are sent out one by one because of different sampling points instead of different time domain resources. A principle of obtaining diversity by the SD-CDD is to introduce a small delay to the plurality of antenna ports. Signals are sent on the plurality of antenna ports at different time points, and the receiving end processes the signals on the plurality of antenna ports as a whole. Therefore, a quantity of channel paths that the received signals pass through is significantly greater than that of a single antenna port, so that frequency selectivity of a channel is improved, and the receiving end obtains a greater frequency-domain diversity gain. In other words, the SD-CDD converts antenna diversity into frequency domain diversity.

However, an SD-CDD technology also involves some defects. For example, a performance gain depends on a channel condition. When a channel has strong frequency selectivity, a gain obtained by the SD-CDD is small. For another example, when demodulation and decoding of a DFT-s-OFDM waveform is performed after inverse discrete Fourier transform (inverse discrete Fourier transform, IDFT), that is, performed in time domain, a coefficient for decoding is obtained by averaging a frequency domain equalizing coefficient in a full bandwidth. As a result, a gain of a frequency selectivity improvement on the DFT-s-OFDM waveform is small. For another example, when a bandwidth is small, space of a cyclic shift is small, frequency selectivity caused by the cyclic shift is limited, and it is difficult to obtain a gain. For another example, the SD-CDD adds a plurality of paths to the channel, and increases delay spread of the channel. When the delay spread exceeds a CP range, channel estimation performance deteriorates.

Based on this, this application further proposes a plurality of diversity communication solutions. In the diversity solutions provided in this application, a diversity gain may be obtained on a transmitting antenna port in both an OFDM waveform and a DFT-s-OFDM waveform. In addition, the proposed solutions are slightly affected by factors such as a channel condition and a bandwidth size, and can provide a stable diversity gain in a plurality of application scenarios.

For ease of understanding embodiments of this application, the following describes a part of terms in embodiments of this application, to help a person skilled in the art have a better understanding.

(1) A network device is a device capable of providing a random access function for a terminal device or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission reception point, TRP, or transmission point, TP), or the like, may be a gNB or a transmission point (TRP or TP) in a 5G system such as an NR system or one antenna panel or one group of antenna panels (including a plurality of antenna panels) of a base station in a 5G system, or may be a network node forming a gNB or a transmission point, for example, a baseband unit (BBU) or a distributed unit (DU, distributed unit).

(2) A terminal device, also referred to as user equipment (user equipment, UE), a mobile station (mobile station, MS), a mobile terminal (mobile terminal, MT), a terminal, or the like, is a device that provides voice and/or data connectivity for users. For example, the terminal device is a handheld device, a vehicle-mounted device, or the like that has a wireless connection function. Currently, the terminal device may be a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home), a wireless terminal in vehicle-to-vehicle (Vehicle-to-Vehicle, V2V) communication, or the like.

(3) A diversity technology (diversity technology) is to transmit information by using a plurality of signal paths, and a receiving end combines signals properly, to greatly reduce impact of multipath fading, so that transmission reliability is improved. The plurality of signal paths have characteristics of transmitting the same information, having approximately equal average signal strength, and fading independently of each other. In brief, if a path experiences severe fading, and another relatively independent path may still include a strong signal, two or more signals may be selected from the plurality of signals for combination. In this way, an instantaneous signal-to-noise ratio and an average signal-to-noise ratio at the receiving end may be improved.

(4) Antenna port: An antenna is an apparatus that effectively emits an electromagnetic wave to a particular orientation in space or effectively receives an electromagnetic wave from a particular orientation in space. In the 3GPP protocol TS 36.211 (LTE) and 38.211 (NR), an antenna port is defined as follows: A channel through which one symbol transmitted on one antenna port passes may be derived from a channel through which another symbol transmitted on the same antenna passes.

The antenna port in 3GPP may also be referred to as a logical antenna port. A correspondence between the antenna port and a physical antenna may have a plurality of implementation possibilities.

In a possibility, a quantity of antenna ports is the same as a quantity of physical antennas, and the antenna ports are in a one-to-one correspondence with the physical antennas.

In a possibility, a quantity of antenna ports is the same as a quantity of physical antennas, but the antenna ports are not in a one-to-one correspondence with the physical antennas. For example, a signal on the antenna port is mapped to the physical antenna after being precoded.

In a possibility, a quantity of antenna ports is less than a quantity of physical antennas. For example, one antenna port may correspond to an array including a plurality of physical antennas.

An antenna port mentioned in this application is similar to the antenna port defined in the 3GPP protocol, and may be considered as a channel identification method. The antenna port in this application may be a physical antenna port, or may be a logical antenna port. In this application, when the antenna port is a logical antenna port, one logical antenna port corresponds to one or more physical antenna ports, and different logical antenna ports correspond to different physical antenna ports. Physical antenna ports corresponding to different logical antenna ports are allowed to overlap. (6) Peak to average power ratio (peak to average power ratio, PAPR):

An amplitude of a radio signal changes continuously in time domain. Therefore, an instantaneous transmit power of the radio signal is not constant. The peak to average power ratio PAPR is referred to a peak to average ratio for short, and may be represented by using the following formula:

$$\text{PAPR} = 10 \times \log_{10}\left(\frac{max|x_i|^2}{mean|x_i|^2}\right)$$

.

$x_i$ represents a time domain discrete value of a group of sequences; $max|x_i|^2$ represents a largest value of a square of the time domain discrete value; and $mean|x_i|^2$ represents an average value of the square of the time domain discrete value.

An OFDM symbol is formed by superposing a plurality of independently modulated subcarrier signals. Therefore, when phases of subcarriers are the same or similar, the superposed signals are modulated by signals with a same initial phase, to generate a large instantaneous power peak value. As a result, a high PAPR is generated. The high PAPR causes nonlinear distortion of a signal, obvious spectrum extension interference, and in-band signal distortion. Consequently, system performance is reduced. (7) Several precoding matrices are described.

Group A: A precoding matrix from a single stream to two antennas.

| TPMI index | $w$ Ordered from left to right in increasing order of TPMI indexes (ordered from left to right in increasing order of TPMI index) | | | | | | |
|---|---|---|---|---|---|---|---|
| 0 to 5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - |

Group B: A precoding matrix from two streams to two antennas.

| TPMI index | $w$ Ordered from left to right in increasing order of TPMI indexes (ordered from left to right in increasing order of TPMI index) | | |
|---|---|---|---|
| 0 to 2 | $\frac{1}{\sqrt{2}}\begin{bmatrix}1&0\\0&1\end{bmatrix}$ | $\frac{1}{2}\begin{bmatrix}1&1\\1&-1\end{bmatrix}$ | $\frac{1}{2}\begin{bmatrix}1&1\\j&-j\end{bmatrix}$ |

(8) An existing pi/2-BPSK modulation formula is: $d(i) = \frac{e^{j\frac{\Pi}{2}(i\,mod2)}}{\sqrt{2}}\left(\left(1-2b(i)\right)+j\left(1-2b(i)\right)\right)$.

To maintain a low PAPR characteristic of pi/2-BPSK, this application provides enhanced pi/2-BPSK modulation. Specifically, when a plurality of modulation symbols (namely, n modulation symbols in this application) are grouped into M groups, modulation symbols obtained after enhanced pi/2-BPSK modulation maintain a same initial phase in M modulation symbols, and a pi/2 phase shift is used between the M modulation symbols. In this way, the plurality of (which is n in the following) modulation symbols are grouped into the M groups, and a phase shift characteristic of pi/2-BPSK is reserved in each group of modulation symbols.

An enhanced pi/2-BPSK modulation formula proposed in this application may be: (where "enhanced pi/2-BPSK" herein is merely for distinguishing from pi/2-BPSK in a conventional technology, and "enhanced pi/2-BPSK" may also be defined as another name, which is not limited)

$$d(i) = \frac{e^{j\frac{\Pi}{2}(\lfloor i/M\rfloor mod2)}}{\sqrt{2}}\left(\left(1-2b(i)\right)+j\left(1-2b(i)\right)\right),$$

or

$$d(i) = \frac{e^{j\frac{\Pi}{2}(\lfloor i/M\rfloor mod4)}}{\sqrt{2}}\left(\left(1-2b(i)\right)+j\left(1-2b(i)\right)\right),$$

M is a quantity of groups, and M is an integer greater than or equal to 2. b represents a bit sequence, and a value of an element in b is 0 or 1. $b(i)$ is an $i^{th}$ bit in the bit sequence (where the bit sequence is usually a coded bit sequence). d(i) is a modulation symbol corresponding to $b(i)$. i is an integer greater than or equal to 0. $\lfloor i/M\rfloor$ represents rounding down i/M to the nearest integer. j is an imaginary part, and j *j=-1.

In a specific example, M is 2. In other words, the foregoing formula is applicable to a case in which the modulation symbols are grouped into two groups.

In another specific example, M is 4. In other words, the foregoing formula is applicable to a case in which the modulation symbols are grouped into four groups.

If ((1-2b(i))+j(1-2b(i)))/sqrt(2) is understood as a BPSK sequence, it can be seen from the foregoing formula that:

when i=0, 1, ..., M-1, a phase shift of a pi/2 BPSK sequence relative to the BPSK sequence is 0; and
when i=M, M+1, ..., 2M-1, the phase shift of the pi/2 BPSK sequence relative to the BPSK sequence is pi/2.

The following describes a phase shift of pi/2 in a unit of M.

When M is 2, in the formula 1, $\lfloor i/M \rfloor$ mod 2 respectively corresponding to i=0 to i=15 is 0, 0, 1, 1, 0, 0, 1, 1, 0, 0, 1, 1, 0, 0, 1, and 1. In other words, phase shifts relative to the BPSK sequence are respectively 0, 0, pi/2, pi/2, 0, 0, pi/2, pi/2, 0, 0, pi/2, pi/2, 0, 0, pi/2, and pi/2.

When M is 4, in the formula 1, $\lfloor i/M \rfloor$ mod 2 respectively corresponding to i=0 to i=15 is 0, 0, 0, 0, 1, 1, 1, 1, 0, 0, 0, 0, 1, 1, 1, and 1. In other words, phase shifts relative to the BPSK sequence are respectively 0, 0, 0, 0, pi/2, pi/2, pi/2, pi/2, 0, 0, 0, 0, pi/2, pi/2, pi/2, and pi/2.

When M is 2, in the formula 2, $\lfloor i/M \rfloor$ mod 4 respectively corresponding to i=0 to i=15 is 0, 0, 1, 1, 2, 2, 3, 3, 0, 0, 1, 1, 2, 2, 3, and 3. In other words, phase shifts relative to the BPSK sequence are respectively 0, 0, pi/2, pi/2, pi, pi, 3pi/2, 3pi/2, 0, 0, pi/2, pi/2, pi, pi, 3pi/2, and 3pi/2.

When M is 4, in the formula 2, $\lfloor i/M \rfloor$ mod 4 respectively corresponding to i=0 to i=15 is 0, 0, 0, 0, 1, 1, 1, 1, 2, 2, 2, 2, 3, 3, 3, and 3. In other words, phase shifts relative to the BPSK sequence are respectively 0, 0, 0, 0, pi/2, pi/2, pi/2, pi/2, pi, pi, pi, pi, 3pi/2, 3pi/2, 3pi/2, and 3pi/2. (9) In this application, a plurality of antenna ports are grouped into a group of antenna ports through division. The following describes several division manners.

For example, division of groups of antenna ports may be performed based on coherence between antenna ports in UE: For example, the UE may report the following coherence characteristics (by using an IE: pusch-TransCoherence) to a network device:

"noncoherent": Antenna ports are incoherent, and coherence precoding cannot be performed between the antenna ports.
"partialCoherent": A part of antenna ports are coherent, and coherence precoding can be performed between the coherent antenna ports.
"fullCoherent": All antenna ports are coherent, and coherence precoding can be performed on all the antenna ports.

When the UE reports a partial coherence capability, that is, reports partialCoherent, the division of the groups of antenna ports may be performed according to the following manner:
All or a part of coherent antenna ports are grouped into a same group of antenna ports. For example, when the UE includes four antenna ports (which are separately an antenna port 0 to an antenna port 3), coherence transmission may be performed between the antenna port 0 and the antenna port 2, and coherence transmission may be performed between the antenna port 1 and the antenna port 3, the antenna ports 0 and 2 may be grouped into a group 1 of antenna ports through division, and the antenna port 1 and the antenna port 3 are grouped into a group 2 of antenna ports through division.

When the UE reports a non coherence capability, that is, reports "noncoherent", a quantity of groups of antenna ports may be equal to a quantity of antenna ports.

A definition of the antenna port herein is as described above. Optionally, the antenna port alternatively represents an antenna port used by the UE to send an SRS.

It should be understood that the UE may report, in another manner, port coherence during uplink MIMO transmission performed by the UE.

The division of the groups of antenna ports may alternatively be directly configured by the network device. For example, the UE includes four antenna ports. The network device may configure an antenna port 0 and an antenna port 1 to form a group 1 of antenna ports, and configure an antenna port 2 and an antenna port 3 to form a group 2 of antenna ports. The network device may configure the groups of antenna ports by using signaling such as RRC or a MAC CE. Optionally, the UE may report, to the network device, an antenna port grouping manner recommended by the UE or related information about antenna port grouping. (10) An extended symbol may also be referred to as a signal after extension.

A symbol corresponding to each antenna is obtained after the extended symbol (signal) is precoded. The symbol may also be referred to as a "signal".

(11) Subblock diagonal matrix:

It is assumed that A is an $n^{th}$ order matrix. If all sub-blocks of a block matrix of A on a non-main diagonal are zero matrices, and all sub-blocks on a main diagonal are square matrices, that is, $\begin{bmatrix} A1 & O & O & O \\ O & A2 & O & O \\ O & O & A3 & O \\ O & O & O & A4 \end{bmatrix}$ , where O represents a zero matrix, and A1, A2, A3, and A4 are all square matrices, A is referred to as a subblock diagonal matrix.

A block anti-diagonal matrix (which is also referred to as an anti-block diagonal matrix) is $\begin{bmatrix} O & O & O & A1 \\ O & O & A2 & O \\ O & A3 & O & O \\ A4 & O & O & O \end{bmatrix}$ . A diagonal of A1, A2, A3, and A4 in the subblock diagonal matrix and a diagonal of A1, A2, A3, and A4 in the block anti-diagonal matrix are different, which may be understood as opposite.

The following describes the solution in detail with reference to the accompanying drawings. Features or content denoted by dashed lines in the figure may be understood as optional operations or optional structures in embodiments of this application.

FIG. 3 is a schematic diagram of a diversity communication process. An example in which a transmitting end sends data to a receiving end is used for description. In an example, the transmitting end is a terminal, and the receiving end is a network device. In an example, the transmitting end is a network device, and the receiving end is also a network device. In another example, the transmitting end is a terminal, and the receiving end is also a terminal. FIG. 3 includes the following steps.

Step 301: A transmitting end performs modulation (modulation) on a plurality of bits (coded bits) obtained after processing such as coding is performed on a transport block (transport block, TB), to obtain a plurality of modulated symbols that may be referred to as modulation symbols or complex symbols.

In a possible implementation, after one transport block is coded, a rate matching module generates a plurality of code blocks, and a plurality of bits in different code blocks are modulated to obtain modulated symbols. A quantity of code blocks herein may be equal to a quantity of groups of antenna ports, and the plurality of code blocks may have different redundancy version identifiers (IDs).

For a process of step 301, refer to the process of step 201 in FIG. 2 or descriptions of an existing technical solution. A specific process of step 301 is not limited in this application. It should be noted that, in step 301, various modulation manners in a conventional technology may be used, or a new modulation manner proposed in this application: an enhanced pi/2-BPSK modulation manner may be used. For a modulation signal generated in the modulation manner, refer to the foregoing descriptions. Details are not described herein again.

In this application, a modulation symbol generated based on a transport block is defined as a data modulation symbol. The transmitting end may multiplex or map, according to a rule, the data modulation symbol to a signal block (block) corresponding to a DFTs-OFDM symbol or an OFDM symbol, to obtain a signal A. In this case, the signal A includes the data modulation symbol. Optionally, the transmitting end may alternatively multiplex or map, according to a rule, the data modulation symbol and a phase tracking reference signal (phase tracking reference signal, PTRS) to a signal block (block) corresponding to a DFT-s-OFDM symbol or an OFDM symbol, to obtain a signal A. In this case, the signal A includes the data modulation symbol and the PTRS. It should be noted that the PTRS herein is also a modulation symbol.

Further, the transmitting end may further group modulation symbols in the signal A by using a quantity of modulation symbols (data and/or PTRSs) that can be carried on each DFT-s-OFDM symbol or OFDM symbol as a unit, to obtain one or more signals a. One signal a includes a modulation symbol corresponding to one DFT-s-OFDM symbol, or a modulation symbol corresponding to one OFDM symbol.

The following uses a modulation symbol included in one DFT-s-OFDM symbol or one OFDM symbol as an example to describe the following processing. For each DFT-s-OFDM symbol or one OFDM symbol, the following processing may be performed.

Step 302: The transmitting end groups n modulation symbols into M groups of modulation symbols.

M is an integer greater than or equal to 2. Specifically, M is greater than or equal to a quantity of groups of antenna ports, and is less than or equal to a quantity of antenna ports. It should be noted that the quantity of antenna ports herein is not a quantity of antenna ports in one group of antenna ports, but a sum of quantities of antenna ports (which are for sending a signal) in all groups of antenna ports.

Each group of modulation symbols is represented by C, and the M groups of modulation symbols are respectively represented by $C_1$, $C_2$, $C_3$, ..., and $C_M$.

Step 302 may also be understood as: The transmitting end divides a signal B into M signals C (which are respectively $C_1$, $C_2$, $C_3$, ..., and $C_M$), where the signal B includes n modulation symbols, and a quantity of modulation symbols included in each signal C is less than n.

The signal B may be the signal a, or the signal B is a part of the signal a. n is an integer greater than or equal to 2, and no other limitation is imposed. A quantity of modulation symbols included in each group of modulation symbols is less than n. One modulation symbol can usually be grouped into only one group. Alternatively, it may be understood as that modulation symbols in different groups are different, and a sum of quantities of modulation symbols included in the M groups of modulation symbols is n.

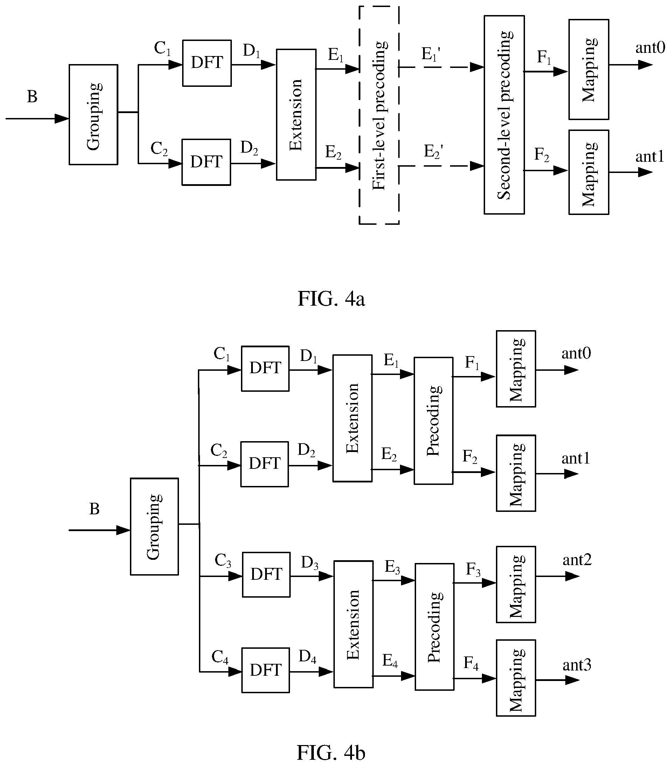

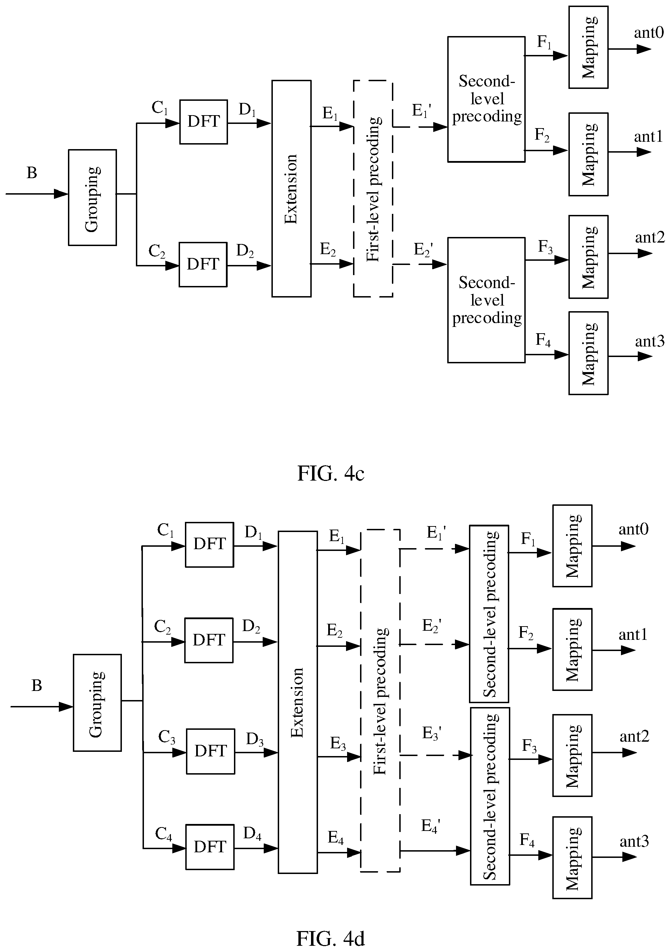

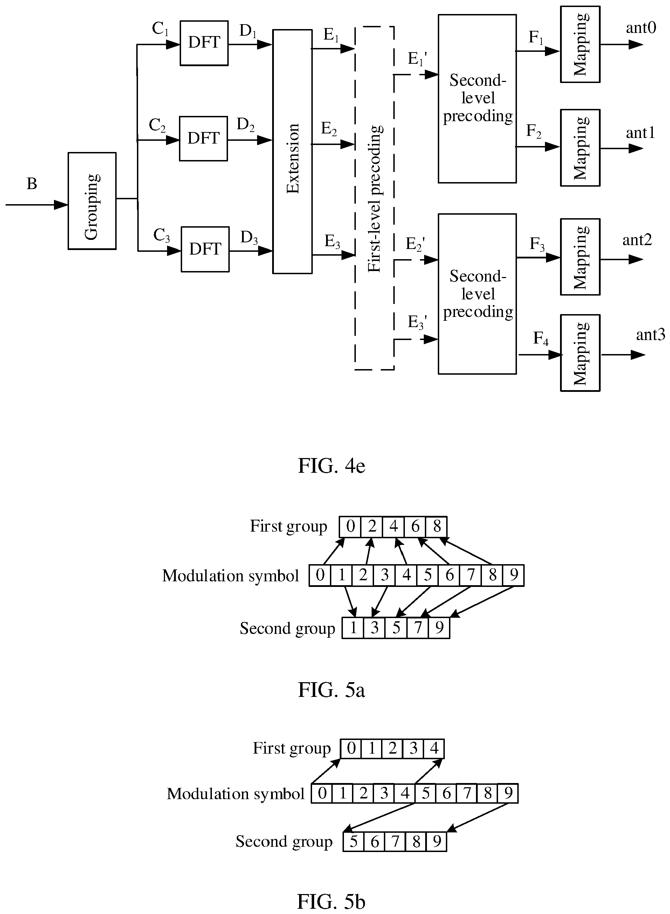

With reference to FIG. 4a, FIG. 4b, FIG. 4c, FIG. 4d, and FIG. 4e, the following describes the quantity M of groups. M is greater than or equal to the quantity of groups of antenna ports, and is less than or equal to the quantity of antenna ports (namely, the sum of the quantities of antenna ports in all the groups of antenna ports). One group of antenna ports may include a same quantity of antenna ports, or may include different quantities of antenna ports. For example, one group of antenna ports includes one, two, three, four, or more antenna ports.

For example, as shown in 4a, two antenna ports are included, which are separately ant0 and ant1. Ant0 and ant1 are coherent or may perform coherence transmission. For example, ant0 and ant1 are on one panel and are grouped into one group of antenna ports, where M is the same as a quantity of antenna ports, that is, M=2.

As shown in FIG. 4b, FIG. 4c, FIG. 4d, and FIG. 4e, four antenna ports are included, which are separately ant0, ant1, ant2, and ant3. Ant0 and ant1 are coherent or may perform coherence transmission, and are grouped into one group of antenna ports. Ant2 and ant3 are coherent or may perform coherence transmission, and are grouped into one group of antenna ports. The groups of antenna ports are incoherent. For example, ant0 and ant1 are on one panel, and ant2 and ant3 are on another panel. In FIG. 4b and FIG. 4d, M is the same as a quantity of antenna ports, that is, M=4. In

FIG. 4c, M is the same as a quantity of groups of antenna ports, that is, M=2. In FIG. 4e, M=3.

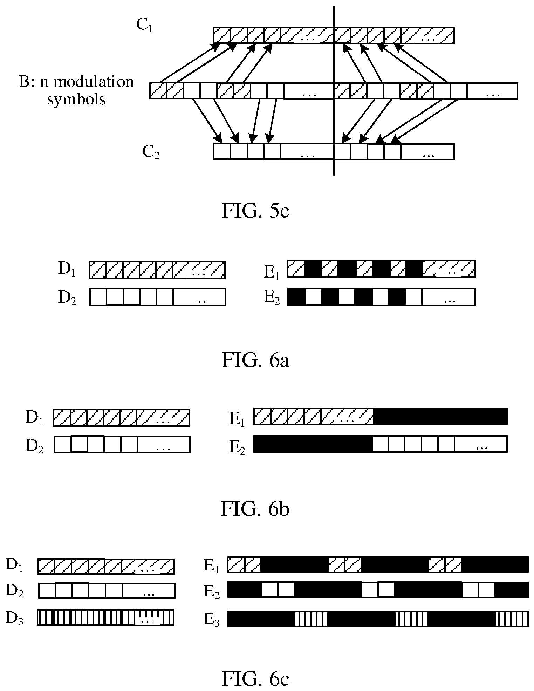

With reference to FIG. 5a, FIG. 5b, and FIG. 5c, the following describes in detail several examples of grouping the n modulation symbols into the M groups of modulation symbols.

When the n modulation symbols are grouped into the M groups of modulation symbols, each group may have a same quantity of modulation symbols or different quantities of modulation symbols. For example, nine modulation symbols are grouped into three groups. A quantity of modulation symbols in each group may be 3. Alternatively, a quantity of modulation symbols in a first group is 1, a quantity of modulation symbols in a second group is 3, and a quantity of modulation symbols in a third group is 5.

In an example, when the n modulation symbols are grouped into the M groups of modulation symbols, a plurality of modulation symbols that are in continuous locations in the n modulation symbols may be grouped into one group. In other words, a group of modulation symbols are in continuous locations in the n modulation symbols. Herein, "continuous locations" may be understood as that there is no interval between locations or there is no interruption between locations, indexes (where the indexes may also be referred to as numbers) of the modulation symbols are continuous, or there is no interval or interruption between indexes of the modulation symbols.

As shown in FIG. 5b, an example in which a plurality of modulation symbols that are in continuous locations in the n modulation symbols are grouped into one group is described. For example, 10 modulation symbols (which are numbered from 0 to 9) are grouped into two groups, modulation symbols numbered from 0 to 4 are grouped into a first group $C_1$, and modulation symbols numbered from 5 to 9 are grouped into a second group $C_2$.

In the example in FIG. 5b, each group has a same quantity of modulation symbols. During actual application, each group may alternatively have different quantities of modulation symbols. For example, modulation symbols numbered from 0 to 3 are grouped into a first group $C_1$, and modulation symbols numbered from 4 to 9 are grouped into a second group $C_2$.

It may be further learned that when the plurality of modulation symbols that are in the continuous locations in the n modulation symbols are grouped into one group, modulation symbols at first n/M locations in the n modulation symbols may be grouped into a first group $C_1$, modulation symbols at an $[(n/M)+1]^{th}$ location to a $(2n/M)^{th}$ location are grouped into a second group $C_2$, modulation symbols at a $[(2n/M)+1]^{th}$ location to a $(3n/M)^{th}$ location are grouped into a third group $C_3$, ..., and modulation symbols at last n/M locations are grouped into an $M^{th}$ group.

In an example, when the n modulation symbols are grouped into the M groups of modulation symbols, a plurality of modulation symbols that are in discontinuous locations in the n modulation symbols may be grouped into one group. It may also be understood as that locations of any two adjacent (or continuous) modulation symbols in any group of modulation symbols are nonadjacent (or discontinuous) in the n modulation symbols. Alternatively, modulation symbol indexes of any two adjacent (continuous) modulation symbols in any group of modulation symbols are nonadjacent (or discontinuous) in the n modulation symbols.

As shown in FIG. 5a, an example in which a plurality of modulation symbols that are in discontinuous locations in the n modulation symbols are grouped into one group is described. For example, 10 modulation symbols (which are separately numbered from 0 to 9) are grouped into two groups, modulation symbols numbered 0, 2, 4, 6, and 8 are grouped into a first group $C_1$, and modulation symbols numbered 1, 3, 5, 7, and 9 are grouped into a second group $C_2$. It can be learned from the example in FIG. 5a that when the modulation symbols are mapped to the two groups: $C_1$ and $C_2$, the $1^{st}$ modulation symbol in the n modulation symbols is allocated to $C_1$, the $2^{nd}$ modulation symbol is allocated to $C_2$, the $3^{rd}$ modulation symbol is allocated to $C_1$, and so on. A $(2i+1)^{th}$ modulation symbol in the n modulation symbols is allocated to $C_1$, and a $(2i+2)^{th}$ modulation symbol is allocated to $C_2$, where i is greater than or equal to 0. This grouping manner may be referred to as a comb grouping manner.

In the example in FIG. 5a, two groups are used as an example. If the modulation symbols are grouped into three groups: $C_1$, $C_2$, and $C_3$, the 1st modulation symbol in the n modulation symbols is allocated to $C_1$, the 2nd modulation symbol is allocated to $C_2$, the 3rd modulation symbol is allocated to $C_3$, and so on. A $(3i+1)$th modulation symbol in the n modulation symbols is allocated to $C_1$, a $(3i+2)$th modulation symbol is allocated to $C_2$, and a $(3i+3)$th modulation symbol is allocated to $C_3$, where i is greater than or equal to 0.

In an example, when the n modulation symbols are grouped into the M groups of modulation symbols, a plurality of modulation symbols in the n modulation symbols may be grouped into one group, where a part of the plurality of modulation symbols are in continuous locations, and a part of the plurality of modulation symbols are in discontinuous locations. In other words, locations of any group of modulation symbols in the n modulation symbols are partially connected and partially discontinuous. It may also be understood as: In any group of modulation symbols, locations of a part of adjacent (or continuous) modulation symbols in the n modulation symbols are nonadjacent (or discontinuous), and locations of a part of the adjacent (or continuous) modulation symbols in the n modulation symbols are adjacent (or continuous). Alternatively, in any group of modulation symbols, modulation symbol indexes of a part of adjacent (continuous) modulation symbols in the n modulation symbols are nonadjacent (or discontinuous), and modulation symbol indexes of a part of adjacent (continuous) modulation symbols in the n modulation symbols are adjacent (or continuous).

As shown in FIG. 5c, an example in which a plurality of modulation symbols in the n modulation symbols are grouped into one group is described, where a part of the plurality of modulation symbols are in continuous locations, and a part of the plurality of modulation symbols are in discontinuous locations. For example, two modulation symbols are first used as a group, and then comb grouping is performed on each group. For example, the n modulation symbols are grouped into two groups: $C_1$ and $C_2$. To be specific, a $(4i+1)$th modulation symbol and a $(4i+2)$th modulation symbol in the n modulation symbols are allocated to $C_1$, and a $(4i+3)$th modulation symbol and a $(4i+4)$th modulation symbol are allocated to $C_2$.

Further, it may be learned that h continuous modulation symbols are first used as a group, and then comb grouping is performed on each group, where h is an integer greater than or equal to 2. If h=1, the example in FIG. 5a is used. If h=n/M, the example in FIG. 5b is used. If h=2, the example in FIG. 5c is used.

The grouping unit h may be 2, 3, 4, 8, or the like. A value of an integer multiple of 2, such as 2, 4, or 8, is for ensuring that when a modulation manner is pi/2 BPSK, a phase change on adjacent symbols in each group satisfies a phase change characteristic of pi/2 after the modulation symbols are grouped into the M groups. Therefore, a limitation may be further set: When the modulation manner used by the transmitting end is existing pi/2 BPSK, the grouping unit h is greater than or equal to 2. When the modulation manner used by the transmitting end is the enhanced pi/2 BPSK provided in this application, the grouping unit h is greater than or equal to 1. When a modulation order used by the transmitting end is higher than a modulation order of the pi/2 BPSK, the grouping unit h is greater than or equal to 1. Alternatively, to unify a signal processing procedure in each modulation manner, the grouping unit h in all modulation manners may be configured to be greater than or equal to 2. Alternatively, the grouping unit h in all modulation manners may be configured to be equal to 1. In this case, the pi/2 BPSK is the enhanced modulation manner described above.

It should be noted that the foregoing described "grouped into a first group $C_1$ (or allocated to a first group $C_1$)", "grouped into a second group $C_2$ (or allocated to a second group $C_2$)", and the like are merely examples of grouping, and the first group $C_1$ and the second group $C_2$ should not limit a grouping sequence. During actual application, the modulation symbol allocated to the first group $C_1$ may alternatively be allocated to the second group $C_2$. The modulation symbol allocated to the second group $C_2$ is allocated to the first group $C_1$. For example, in the example in FIG. 5c, the $(4i+1)$th modulation symbol and the $(4i+2)$th modulation symbol in the n modulation symbols may alternatively be allocated to the second group $C_2$, and the $(4i+3)$th modulation symbol and the $(4i+4)$th modulation symbol are allocated to the first group $C_1$.

In step 301, an optional implementation is described. The PTRS and the data modulation symbol are multiplexed on the signal block (block) of the DFT-s-OFDM or the OFDM. If the process is performed, the mth group of modulation symbols includes the data modulation symbol and the PTRS. If the process is not performed, the mth group of modulation symbols includes the data modulation symbol.

If the PTRS is configured in the current DFT-s-OFDM symbol or the OFDM symbol, and a process of multiplexing the PTRS and the data modulation symbol on the signal block (block) of the DFT-s-OFDM symbol or the OFDM symbol is not performed before the modulation symbols are grouped into the M groups in step 302, optionally, after the mth group of modulation symbols is obtained in step 302, a pattern and a multiplexing location of the PTRS in each group may be determined based on configuration information of the PTRS and related information about grouping the modulation symbols into the M groups, to complete multiplexing of the PTRS and the data modulation symbol. In this case, an updated mth group of modulation symbols includes the data modulation symbol and the PTRS. Optionally, another modulation symbol, for example, a modulation symbol corresponding to uplink control information, may be further added to the mth group of modulation symbols. In this case, the updated mth group of modulation symbols includes the data modulation symbol and a modulation symbol corresponding to an uplink control signal, and optionally, further includes the PTRS.

Step 303: The transmitting end performs discrete Fourier transform DFT on the $m^{th}$ group of modulation symbols, to obtain the $m^{th}$ group of modulation symbols on which DFT is performed. A symbol on which DFT is performed may also be referred to as a symbol, a complex symbol, or the like.

It should be understood that the $m^{th}$ group of modulation symbols herein may be the $m^{th}$ group of modulation symbols obtained by grouping the modulation symbols into the M groups, or may be the "updated $m^{th}$ group of modulation symbols" described above. The $m^{th}$ group of modulation symbols includes the data modulation symbol, and optionally, further includes the modulation symbol corresponding to the uplink control signal and/or the PTRS.

A value of m is an integer from 1 to M, for example, m=1, 2, 3, ..., or M. If the $m^{th}$ group is considered as a group whose index is m, the index may also start from 0, and m=0, 1, 2, 3, ..., or M-1. In general, the transmitting end performs DFT on each group of modulation symbols.

Each group of symbols on which DFT is performed is represented by D, and the M groups of symbols on which DFT is performed are respectively represented by $D_1$, $D_2$, $D_3$, ..., and $D_M$.

Step 303 may alternatively be understood as: The transmitting end performs discrete Fourier transform DFT on an $m^{th}$ signal $C_m$, to obtain an $m^{th}$ signal $D_m$. The signal $C_m$ includes the $m^{th}$ group of modulation symbols, and the signal $D_m$ includes the $m^{th}$ group of modulation symbols on which DFT is performed. A dimension of the $m^{th}$ signal $D_m$ is the same as a dimension of the $m^{th}$ signal $C_m$.

When DFT is performed on the $m^{th}$ group of modulation symbols, a size of the used DFT is a quantity of symbols in the $m^{th}$ group of modulation symbols, instead of the quantity n of modulation symbols. For example, when a quantity of modulation symbols in a group is Nex/2, a point quantity (the size) of the DFT is Nex/2. The DFT matches a quantity of modulation symbols in each group, so that diversity space is reserved for subsequent diversity in frequency domain/space domain. In addition, a dimension of the DFT can be reduced, and difficulty and complexity of the DFT can be reduced. In addition, it should be noted that the $m^{th}$ group of modulation symbols herein may be the $m^{th}$ group of modulation symbols obtained by grouping the modulation symbols into the M groups, or may be the "updated $m^{th}$ group of modulation symbols" described above.

If quantities of modulation symbols included in different groups of modulation symbols (that is, different signals C) are the same or different, when DFT is performed on the different groups of modulation symbols, sizes of the used DFT are the same or different.

Step 304: The transmitting end adds one or more preset symbols to the $m^{th}$ group of valid symbols, to obtain the $m^{th}$ group of extended symbols.

A quantity of extended symbols in the $m^{th}$ group is defined as Nex. Nex is usually less than or equal to a quantity of REs (or subcarriers) in a scheduled bandwidth. Nex and the quantity of REs in the scheduled bandwidth are not limited. It should be noted that if DFT in step 303 is not performed, the valid symbol is a modulation symbol. If DFT in step 303 is performed, the valid symbol is a symbol on which DFT is performed.

The preset symbol may be 0, or may be another symbol. For ease of description, adding one or more preset symbols is referred to as extension in the following. In other words, the transmitting end extends each group of valid symbols, to obtain each group of extended symbols. Extension may also be understood as "mapping", that is, location mapping of the valid signal.

Each group of extended symbols is represented by E, and the M groups of extended symbols are respectively represented by $E_1$, $E_2$, $E_3$, ..., and $E_M$. For example, a length of a signal E is Nex.

If DFT in step 303 is not performed, step 304 may alternatively be understood as: The transmitting end adds one or more preset symbols to (extends) the $m^{th}$ signal $C_m$, to obtain an $m^{th}$ signal $E_m$. If DFT in step 303 is performed, step 304 may alternatively be understood as: The transmitting end adds one or more preset symbols to (extends) the $m^{th}$ signal $C_m$, to obtain an $m^{th}$ signal $E_m$. A quantity of symbols included in the $m^{th}$ signal $E_m$ is Nex.

With reference to FIG. 6a, FIG. 6b, and FIG. 6c, the following describes several examples of adding one or more preset symbols to each group of valid symbols to obtain each group of Nex extended symbols. The following several extension examples all satisfy a characteristic 1: Locations of any group of valid symbols in the group of extended symbols do not overlap locations of another group of valid symbols in the another group of extended symbols. That the locations do not overlap may alternatively be replaced with that the locations are different. A specific example of that the locations do not overlap may be that the locations are complementary, or certainly may alternatively be that the locations are not complementary. Optionally, locations of s groups of modulation symbols corresponding to a $g^{th}$ group of antenna ports in the s groups of extended symbols do not overlap locations of at least one group of modulation symbols corresponding to any other group of antenna ports in the at least one group of extended symbols.

In an example, x preset symbols are added to every y valid symbols in the $m^{th}$ group of valid symbols, to obtain the $m^{th}$ group of extended symbols, where y is an integer greater than or equal to 1, and x is an integer greater than or equal to 1.

As shown in FIG. 6a, the quantity M of groups is 2, a symbol in $D_1$ occupies an odd-numbered location in $E_1$, and a symbol in $D_2$ occupies an even-numbered location in $E_2$. Certainly, the symbol in $D_1$ may alternatively occupy an even-numbered location in $E_1$, and the symbol in $D_2$ may occupy an odd-numbered location in $E_2$.

It may also be understood as that y is 1, and x is 1. To be specific, one preset symbol is added to every valid symbol. A location of one preset symbol that is in a first group in the first group of extended symbols is a location of one valid symbol that is in a second group in the second group of extended symbols. Similarly, a location of one preset symbol that is in the second group in the second group of extended symbols is a location of one valid symbol that is in the first group in the first group of extended symbols. In other words, locations of the first group of valid symbols in the first group of extended symbols do not overlap locations of the second group of valid symbols in the second group of extended symbols, and that the locations do not overlap may alternatively be replaced with that the locations are different or complementary.

If the quantity M of groups is 3, in an example, y is 1, and x is 2. To be specific, two preset symbols are added to every valid symbol. Locations of two continuous preset symbols that are in the first group in the first group of extended symbols are respectively a location of one valid symbol that is in the second group in the second group of extended symbols and a location of one valid symbol that is in a third group in the third group of extended symbols. Similarly, locations of two continuous preset symbols that are in the second group in the second group of extended symbols are respectively a location of one valid symbol that is in the first group in the first group of extended symbols and a location of one valid symbol that is in the third group in the third group of extended symbols. Similarly, locations of two continuous preset symbols that are in the third group in the third group of extended symbols are respectively a location of one valid symbol that is in the first group in the first group of extended symbols and a location of one valid symbol that is in the second group in the second group of extended symbols.

If the quantity M of groups is 4, in an example, y is 1, and x is 3. To be specific, third preset symbols are added to every valid symbol. Each of locations of three continuous preset symbols that are in each group in the group of extended symbols is a location of one valid symbol that is in each of the other three groups in the group of extended symbols.

In conclusion, it may be concluded that when the quantity of groups is M, in an example, y is 1, and x is M-1. To be specific, M-1 preset symbols are added to every valid symbol. Each of locations of continuous M-1 preset symbols that are in the $m^{th}$ group in the $m^{th}$ group of extended symbols is a location of one valid symbol that is in each of the other M-1 groups in the group of extended symbols.

If the quantity M of groups is 2, y is 2, and x is 2. To be specific, two preset symbols are added to every two valid symbols. Locations of two continuous preset symbols that are in the first group in the first group of extended symbols are locations of two continuous valid symbols that are in the second group in the second group of extended symbols. Similarly, locations of two continuous preset symbols that are in the second group in the second group of extended symbols are locations of two continuous valid symbols that are in the first group in the first group of extended symbols. Similarly, locations of the first group of valid symbols in the first group of extended symbols do not overlap locations of the second group of valid symbols in the second group of extended symbols, and that the locations do not overlap may alternatively be replaced with that the locations are different or complementary.

If the quantity M of groups is 3, y is 2, and x is 4. To be specific, four preset symbols are added to every two valid symbols. Locations of four continuous preset symbols that are in the first group in the first group of extended symbols are respectively locations of two valid symbols that are in the second group in the second group of extended symbols and locations of two valid symbols that are in the third group in the third group of extended symbols. Similarly, locations of four continuous preset symbols that are in the second group in the second group of extended symbols are respectively locations of two valid symbols that are in the first group in the first group of extended symbols and locations of two valid symbols that are in the third group in the third group of extended symbols. The third group is similar, and details are not described herein again. As shown in FIG. 6c, $D_1$ is at the $1^{st}$ location, the $2^{nd}$ location, the $7^{th}$ location, the $8^{th}$ location, the $13^{th}$ location, the $14^{th}$ location, and the like in $E_1$, $D_2$ is at the $3^{rd}$ location, the $4^{th}$ location, the $9^{th}$ location, the $10^{th}$ location, and the like in $E_2$, and $D_3$ is at the $5^{th}$ location, the $6^{th}$ location, the $11^{th}$ location, the $12^{th}$ location, and the like in $E_3$.

In conclusion, it may be concluded that when the quantity of groups is M, in an example, y is 2, and x is 2(M-1). To be specific, 2(M-1) preset symbols are added to every two valid symbols. Locations of continuous 2(M-1) preset symbols that are in the $m^{th}$ group in the $m^{th}$ group of extended symbols are respectively locations of two valid symbols that are in each of the other M-1 groups in the group of extended symbols.

Further, it can be concluded that when the quantity of groups is M, x=y*(M-1). Each of locations of continuous y*(M-1) preset symbols that are in the $m^{th}$ group in the $m^{th}$ group of extended symbols is a location of y valid symbol that is in each of the other M-1 groups in the group of extended symbols. In other words, x is an integer multiple of y. y is an integer greater than or equal to 1. In an example, y is an integer multiple of a quantity of resource elements REs included in a resource block group RBG.

It can be further concluded that:

In an example, as shown in FIG. 6a, that locations of the $m^{th}$ group of valid symbols in the $m^{th}$ group of extended symbols are discontinuous may alternatively be understood as: locations of any two adjacent symbols that are in the $m^{th}$ group of valid symbols in the $m^{th}$ group of extended symbols are nonadjacent.

In an example, as shown in FIG. 6b, that locations of the $m^{th}$ group of valid symbols in the $m^{th}$ group of extended symbols are continuous may alternatively be understood as: locations of any two adjacent symbols that are in the $m^{th}$ group of valid symbols in the $m^{th}$ group of extended symbols are adjacent.

In an example, as shown in FIG. 6c, that a part of locations of the $m^{th}$ group of valid symbols in the $m^{th}$ group of extended symbols are continuous and a part of the locations are discontinuous may alternatively be understood as: locations of a part of adjacent symbols that are in the $m^{th}$ group of valid symbols in the $m^{th}$ group of extended symbols are adjacent, and locations of a part of the adjacent symbols in the $m^{th}$ group of extended symbols are nonadjacent. In FIG. 6b, the quantity M of groups is 2, a symbol in $D_1$ is located in a first half of $E_1$, and a symbol in $D_2$ occupies a second half of $E_2$. Certainly, the symbol in $D_1$ may alternatively occupy a second half of $E_1$, and the symbol in $D_2$ may occupy a first half of $E_2$.

It may also be understood as that y is Nex/2, and x is Nex/2. To be specific, Nex/2 preset symbols are added to every Nex/2 valid symbols. Location of Nex/2 continuous preset symbols that are in the first group in the first group of extended symbols are locations of Nex/2 continuous valid symbols that are in the second group in the second group of extended symbols. Similarly, locations of Nex/2 continuous preset symbols that are in the second group in the second group of extended symbols are locations of Nex/2 continuous valid symbols that are in the first group in the first group of extended symbols. Similarly, locations of the first group of valid symbols in the first group of extended symbols do not overlap locations of the second group of valid symbols in the second group of extended symbols, or the locations are different or complementary.

The following describes details of the foregoing several examples.

A resource element group REG is defined in this application. One REG includes P REs, where P is an integer greater than or equal to 1. FIG. 6a may be considered as an example in which a REG is used as a unit and P=1 in FIG. 6c.

FIG. 6b may be considered as an example in which an RBG is used as a unit and a quantity Q of RBs included in the RBG is equal to (Nex/12)/2 in FIG. 6c. Alternatively, FIG. 6b may be considered as an example in which a REG is used as a unit and P=Nex/2 in FIG. 6c. For example, the following formula may be used to indicate a relationship between the extended signal E and the signal D that is not extended: Q is a quantity of RBs included in the RBG, and p=Q*12. In other words, P is an integer multiple of 12, and the multiple is Q.

It can be concluded from the foregoing that when the quantity of groups is M, x=y*(M-1). Each of locations of continuous y*(M-1) preset symbols that are in the $m^{th}$ group in the $m^{th}$ group of extended symbols is a location of y valid symbol that is in each of the other M-1 groups in the group of extended symbols. In this example, 2 in P=y;mod(floor(k/P),2) and floor(k/P)/2 may be considered as x+y.

During extension, the following formula 3 may be satisfied:

$$ e_i(k) = \begin{cases} d_i\left(floor\left(\frac{k}{MP}\right) * P + mod(k,P)\right) & mod(floor(k/P),M) = i-1 \\ 0 & otherwise \end{cases} $$

k is a number of each symbol in the extended symbols, k=0, ..., or Nex-1. M is a quantity of groups. ei represents an $i^{th}$ group of extended symbols, di represents an $i^{th}$ group of valid symbols (symbols on which DFT is performed or modulation symbols). $floor\left(\frac{k}{MP}\right) * P + mod(k,P)$ is an index of a symbol in each group of valid symbols. When the number k starts from 1, floor(k/P) in the foregoing formula may be replaced with ceil(k/P)-1, and mod(k,P) is replaced with mod(k-1,P)+1.

In addition, a size of the REG may be adaptively selected based on a factor such as a channel. For example, when a distance between a terminal and a network device is large, an SNR is low, and coverage is a main problem, P=1 may be selected to implement RE-level inter-group interleave mapping. For another example, when a channel is flat and frequency selectivity is weak, P=48 may be selected to implement RBG-level inter-group interleave mapping.

In addition, an extension manner may be indicated by using signaling. Alternatively, the extension manner may be agreed on in advance. Alternatively, the extension manner is associated with a subband-level TPMI, channel quality information (Channel Quality Information, CQI), and the like fed back by UE. For example, a larger difference between TPMIs or CQIs on a plurality of subbands indicates a smaller value of P; and a smaller difference between TPMIs or CQIs on a plurality of subbands indicates a larger value of P. The difference between the TPMIs or the CQIs is negatively correlated with the value of P. Alternatively, the extension manner is implicitly indicated by a modulation order. For example, when the modulation order is equal to or lower than QPSK, REG=1; or when the modulation order is higher than or equal to 64 QAM, REG=12. In this way, a PTRS block can be mapped to a segment of continuous frequency domain resources. Alternatively, the extension manner is indicated by using a combination of explicit signaling and an implicit manner. For example, RRC or DCI indicates a value of the REG. When the modulation manner is higher than QPSK, a priority of the explicit signaling is higher, that is, an REG indicated by the explicit signaling is used. When the modulation manner is equal to or lower than the QPSK, the explicit signaling is invalid, and REG=1 is used.

In the foregoing several examples, y corresponding to each group has a same value. During actual application, values of y in different groups may alternatively be different, and values of x in different groups may alternatively be different. Details continue to be described in the following.

For example, M is 2, 10 preset symbols are added to every five valid symbols in the first group, and five preset symbols are added to every 10 valid symbols in the second group. Locations of five continuous valid symbols that are in the first group in the first group of extended symbols are locations of 10 continuous preset symbols that are in the second group in the second group of extended symbols.

Based on the example, it can be concluded that, in the first group, x is an integer multiple of y, and in the second group, y is an integer multiple of x. Further, the multiple of x for y corresponding to the second group is the same as the multiple of y for x corresponding to the first group.

In this application, a manner of adding one or more preset symbols to each group of symbols to obtain each group of Nex extended symbols is not limited, provided that the foregoing described characteristic 1 is satisfied.

The following describes application of the foregoing extension examples in FIG. 4a, FIG. 4b, FIG. 4c, FIG. 4d, and FIG. 4e.

In FIG. 4a and FIG. 4c, the quantity M of groups is 2, and the two groups are jointly extended. An extension manner used for the two groups may be any extension manner in which M is 2 described above, provided that the foregoing characteristic 1 is satisfied. To be specific, a location of $D_1$ in $E_1$ and a location of $D_2$ in $E_2$ do not overlap, are different, or are complementary.

In FIG. 4b, the quantity M of groups is 4, each group of antenna ports is separately extended, and two groups of antenna ports are independent of each other. An extension manner used for any group of antenna ports may be any extension manner in which M is 2 described above, and each group of antenna ports needs to separately satisfy the foregoing characteristic 1, instead of that the two groups of antenna ports satisfy the foregoing characteristic 1 as a whole. To be specific, the location of $D_1$ in $E_1$ and the location of $D_2$ in $E_2$ do not overlap, are different, or are complementary. A location of $D_3$ in $E_3$ and a location of $D_4$ in $E_4$ do not overlap, are different, or are complementary. In FIG. 4d, the quantity M of groups is 4, and the four groups are jointly extended. An extension manner used for the four groups of signals may be any extension manner in which M is 4 described above, provided that the four groups of signals satisfy the foregoing characteristic 1. To be specific, the location of $D_1$ in $E_1$ does not overlap, is different from, or complements locations of the other three signals D in the signal E; the location of $D_2$ in $E_2$ does not overlap, is different from, or complements the locations of the other three signals D in the signal E; a location of $D_3$ in $E_3$ does not overlap, is different from, or complements the locations of the other three signals D in the signal E; and a location of $D_4$ in $E_4$ does not overlap, is different from, or complements the locations of the other three signals D in the signal E.

In FIG. 4e, the quantity M of groups is 3, and the three groups are jointly extended. An extension manner used for the three groups of signals may be any extension manner in which M is 3 described above, provided that the three groups of signals satisfy the foregoing characteristic 1. To be specific, the location of $D_1$ in $E_1$, the location of $D_2$ in $E_2$, and a location of $D_3$ in $E_3$ do not overlap, are different, or are complementary. The location of $D_2$ in $E_2$, the location of $D_1$ in $E_1$, and the location of $D_3$ in $E_3$ do not overlap, are different, or are complementary. The location of $D_3$ in $E_3$, the location of $D_1$ in $E_1$, and the location of $D_2$ in $E_2$ do not overlap, are different, or are complementary.

Different groups of valid symbols are extended. Because locations of the different groups of valid symbols in the extended symbols do not overlap, are complementary, or are different, when subcarrier mapping is performed subsequently, the valid symbols may be mapped to different subcarriers, to implement diversity in frequency domain. In addition, with reference to the example in FIG. 4d, an example in which there are two groups of antenna ports, one group of antenna ports corresponds to two groups of valid symbols, and four groups of valid symbols are jointly extended is used to describe an extension manner.

The extension manner satisfies a characteristic 2: For one group of antenna ports, locations of a first group of valid symbols in the first group of extended signals are the same as locations of a second group of valid symbols in the second group of extended signals. For the two groups of antenna ports, locations of a first group of valid symbols corresponding to a first group of antenna ports in the first group of extended signals corresponding to the first group of antenna ports and locations of a first group of valid symbols corresponding to a second group of antenna ports in the first group of extended signals corresponding to the second group of antenna ports do not overlap, are different, or are complementary.

It may also be understood as that extension manners used for signals that belong to a same group of antenna ports in the four groups are the same, and signals that belong to different groups of antenna ports may be any extension manner described above, provided that the characteristic 1 is satisfied between the groups of antenna ports. To be specific, a manner of extending $D_1$ to $E_1$ is the same as a manner of extending $D_2$ to $E_2$, and a manner of extending $D_3$ to $E_3$ is the same as a manner of extending $D_4$ to $E_4$. It may alternatively be understood as that the location of $D_1$ in $E_1$ is the same as the location of $D_2$ in $E_2$. The location of $D_3$ in $E_3$ is the same as the location of $D_4$ in $E_4$. In addition, the

location of $D_1$ in $E_1$ and the location of $D_3$ in $E_3$ do not overlap, are different, or are complementary.

For example, in FIG. 4d, $D_1$ is located in a first half of $E_1$, and $D_2$ is also located in a first half of $E_2$. $D_3$ is located in a second half of $E_3$, and $D_4$ is also located in a second half of $E_4$. During actual application, $D_1$ may alternatively be located in a second half of $E_1$, and $D_2$ may alternatively be located in a second half of $E_2$. $D_3$ is located in a first half of $E_3$, and $D_4$ is also located in a first half of $E_4$. For example, detailed descriptions may be further provided with reference to FIG. 6b, the location of $D_1$ in $E_1$ and the location of $D_2$ in $E_2$ in FIG. 4d are equivalent to the location of $D_1$ in $E_1$ in FIG. 6b. The location of $D_3$ in $E_3$ and the location of $D_4$ in $E_4$ in FIG. 4d are equivalent to the location of $D_2$ in $E_2$ in FIG. 6b. For another example, $D_1$ is at an even-numbered location of $E_1$, $D_2$ is at an even-numbered location of $E_2$, $D_3$ is at an odd-numbered location of $E_3$, and $D_4$ is at an odd-numbered location of $E_4$.

In another case in FIG. 4e, extension manners used for signals that belong to a same group of antenna ports in the three groups are the same, and signals that belong to different groups of antenna ports may be any extension manner described above, provided that the characteristic 1 is satisfied between the groups of antenna ports. To be specific, a manner of extending $D_1$ to $E_1$ is the same as a manner of extending $D_2$ to $E_2$. It may alternatively be understood as that the location of $D_1$ in $E_1$ is the same as the location of $D_2$ in $E_2$. The location of $D_3$ in $E_3$ and the location of $D_1$ in $E_1$ do not overlap, are complementary, or are different. For example, $D_1$ is located in a first half of $E_1$, and $D_2$ is also located in a first half of $E_2$. $D_3$ is located in a second half of $E_3$. Alternatively, $D_1$ is at an even-numbered location of $E_1$, $D_2$ is at an even-numbered location of $E_2$, and $D_3$ is at an odd-numbered location of $E_3$.

Based on the foregoing example, if a quantity of groups of antenna ports is not limited, and a quantity of groups corresponding to one group of antenna ports is not limited, the characteristic 2 may be updated to: For a group of antenna ports, locations of all groups of valid symbols in the respective groups of extended signals are the same. To be specific, in a group of antenna ports, locations of any group of modulation symbols in the group of extended symbols are the same as locations of another group of modulation symbols in the another group of extended symbols. For different antenna ports, locations of a first group of valid symbols corresponding to any group of antenna ports in the first group of extended signals corresponding to the group of antenna ports and locations of a first group of valid symbols corresponding to another group of antenna ports in the first group of extended signals corresponding to the another group of antenna ports do not overlap, are different, or are complementary. Alternatively, locations of s groups of modulation symbols corresponding to a $g^{th}$ group of antenna ports in the s groups of extended symbols and locations of at least one group of modulation symbols corresponding to any other group of antenna ports in the at least one group of extended symbols do not overlap, are different, or are complementary..

Different groups of valid symbols are extended. Because locations of valid symbols of different groups of antenna ports in the extended symbols do not overlap, are complementary, or are different, when subcarrier mapping is performed subsequently, the valid symbols may be mapped to different subcarriers, to implement diversity of the different groups of antenna ports in frequency domain.

Step 305: The transmitting end performs (second-level) precoding on s groups of modulation symbols corresponding to a $g^{th}$ group of antenna ports, to obtain a symbol corresponding to each antenna port in the $g^{th}$ group of antenna ports. In second-level precoding, a dimension of a precoding matrix for the $g^{th}$ group of antenna ports is related to s and a quantity of antenna ports included in the $g^{th}$ group of antenna ports. s is an integer greater than or equal to 1 and less than or equal to M, and g is an integer greater than or equal to 1. If g indicates an index of a group, g may alternatively start from 0. In other words, a quantity of input streams for precoding is s, and a quantity of output streams is a quantity of antenna ports included in one group of antenna ports, for example, 2 or 4.

It should be noted that the transmitting end may perform precoding once or twice. For ease of differentiation, precoding in step 305 may be referred to as second-level precoding. The following further describes other precoding, and the precoding described below is referred to as first-level precoding. First-level precoding is for allocating an extended symbol among a plurality of antenna ports or a plurality of groups of antenna ports, that is, selecting an antenna port or a group of antenna ports for each group of extended symbols. First-level and second-level herein are merely for differentiation, and should not constitute a limitation on this application. Second-level precoding is for determining a transmitted signal on each antenna port in a group of antenna ports.

Quantities s of groups corresponding to different groups of antenna ports are the same or different. For example, s is 1, 2, 3, or 4.

The symbol that corresponds to each antenna port and that is obtained through second-level precoding is represented by F. Step 305 may alternatively be understood as: The transmitting end performs second-level precoding on s signals E corresponding to a $g^{th}$ group of antenna ports, to obtain a signal F corresponding to each antenna port in the $g^{th}$ group of antenna ports.

In FIG. 4a, there are two antenna ports. A quantity s of input streams for second-level precoding is 2, and a quantity of output streams is 2.

In FIG. 4b, there are four antenna ports. A quantity s of input streams for second-level precoding is 2, and a quantity of output streams is 2.

In FIG. 4c, there are four antenna ports. A quantity s of input streams for second-level precoding is 1, and a quantity of output streams is 2.

In FIG. 4d, there are four antenna ports. A quantity s of input streams for second-level precoding is 2, and a quantity of output streams is 2.

In FIG. 4e, there are four antenna ports. A quantity s of input streams for second-level precoding in one group of antenna ports is 2, and a quantity of output streams is 2. A quantity s of input streams for second-level precoding in the other group of antenna ports is 1, and a quantity of output streams is 2.

It is described above that, in FIG. 4a, ant0 and ant1 are coherent or may perform coherence transmission, and are grouped into one group of antenna ports. In FIG. 4b, FIG. 4c, FIG. 4d, and FIG. 4e, ant0 and ant1 are coherent or may perform coherence transmission, and are grouped into one group of antenna ports. ant2 and ant3 are coherent or may perform coherence transmission, and are grouped into one group of antenna ports. The groups of antenna ports are incoherent. For example, ant0 and ant1 are on one panel, and ant2 and ant3 are on another panel.

A relationship may be established between two antenna ports in one group of antenna ports through second-level precoding. Because the groups of antenna ports are incoherent, a relationship cannot be established between antenna ports in the groups of antenna ports through second-level precoding.

For example, when first-level precoding is not included, in FIG. 4a, FIG. 4b, and FIG. 4d, the two extended signals $E_1$ and $E_2$ are mapped to the antenna ports ant0 and ant1 by using a 2*2 precoding matrix. Alternatively, two extended signals $E_3$ and $E_4$ are mapped to the antenna ports ant2 and ant3 by using a 2*2 precoding matrix. In FIG. 4a, FIG. 4c, and FIG. 4d, the 2*2 precoding matrix for each group of antenna ports is a precoding matrix from two streams to two antennas, and may be, but is not limited to, the precoding matrix of the group D described above. Precoding matrices used by different groups of antenna ports may be the same or different.

In FIG. 4c, when first-level precoding is not included, for the two extended signals $E_1$ and $E_2$, the signal $E_1$ needs to be mapped to the antenna ports ant0 and ant1 by using a 2*1 precoding matrix, and the signal $E_2$ needs to be mapped to the antenna ports ant2 and ant3 by using the 2* 1 precoding matrix. The 2* 1 precoding matrix used in FIG. 4c is a precoding matrix from a single stream to a two antennas, and may be, but is not limited to, the precoding matrix of the group A described above. Precoding matrices used by different groups of antenna ports may be the same or different. For example, a precoding matrix whose index is 1 in the group A is used for the antenna ports ant0 and ant1, and a precoding matrix whose index is 2 in the group A is used for the antenna ports ant2 and ant3. Alternatively, a precoding matrix whose index is 1 in the group A is used for the antenna ports ant0 and ant1, and the precoding matrix whose index is 1 in the group A is used for the antenna ports ant2 and ant3.

In FIG. 4e, when first-level precoding is not included, the two extended signals $E_1$ and $E_2$ are mapped to the antenna ports ant0 and ant1 by using a 2*2 precoding matrix, and the extended signal $E_3$ is mapped to the antenna ports ant2 and ant3 by using a 2* 1 precoding matrix.

A signal on which precoding is not performed is extended, and diversity in frequency domain is implemented. Subsequently, based on division and selection of coherent groups of antenna ports, the diversity in frequency domain may be further converted into diversity on an antenna port. In other words, different frequency domain resources correspond to different groups of antenna ports. For example, in the foregoing formula 3, when P=1, frequency domain resources occupied by two groups of antenna ports have a comb-shaped characteristic, where one group of antenna ports occupies an even-numbered subcarrier in a scheduled bandwidth, and the other group of antenna ports occupies an odd-numbered subcarrier in the scheduled bandwidth.

The following describes in detail a process in which the transmitting end determines the precoding matrix for second-level precoding.

The transmitting end may receive indication information, where the indication information is for determining the precoding matrix. For example, indication information sent by the receiving end may be received, or indication information sent by a device other than the receiving end may be received. When the transmitting end is a terminal, the indication information may be sent to the terminal by using radio resource control (radio resource control, RRC), media access control (medium access control, MAC), downlink control information (downlink control information, DCI), or the like.

In an example, the indication information indicates an index of the precoding matrix. For example, the indication information includes a sounding reference signal resource index (sounding reference signal resource index, SRI). The receiving end determines the precoding matrix based on the SRI.

In an example, the indication information includes a precoding matrix index. The precoding matrix index indicates a precoding matrix in a precoding matrix set, and the precoding matrix set includes a precoding matrix for diversity transmission and a precoding matrix for non-diversity transmission. In this application, the set may alternatively be replaced with a group or a table. The transmitting end uses the precoding matrix corresponding to the precoding matrix index included in the indication information as the precoding matrix for precoding in this application. In this example, the precoding matrix for diversity transmission and the precoding matrix for non-diversity transmission are jointly indexed. In this way, in the method, only the precoding matrix index needs to be indicated, and the transmitting end can find the corresponding precoding matrix. This indication manner is simple and accurate. The precoding matrix index in this application may be a transmitting precoding matrix index (transmitting precoding matrix index, TPMI). In an example, the indication information includes a precoding matrix index and an indication indicating whether diversity transmission is performed. In this example, the precoding matrix for diversity transmission and the precoding matrix for non-diversity transmission each have an independent compiling index number, and there may be a case in which the index numbers are the same. Therefore, the indication information may further include the indication indicating whether diversity transmission is performed. In this way, when determining to perform diversity transmission, the transmitting end may search a precoding matrix that is for diversity transmission for a precoding matrix corresponding to the precoding matrix index, and does not incorrectly search a precoding matrix that is for non-diversity transmission for the precoding matrix.

In an example, the diversity transmission indication may be an explicit indication. For example, the diversity transmission indication occupies one bit. For example, when the bit is 1, diversity transmission is indicated, and when the bit is 0, non-diversity transmission is indicated.

In an example, diversity transmission may be associated with a transmitting waveform. For example, an OFDM waveform is associated with diversity transmission, and a DFT-s-OFDM waveform is associated with non-diversity transmission. In this case, the diversity transmission indication may be an indication indicating a transmitting waveform. For example, when the diversity transmission indication indicates the OFDM waveform, the transmitting end does not perform diversity transmission, and searches a precoding matrix that is for non-diversity transmission for a precoding matrix corresponding to the pre-coding matrix index. When the diversity transmission indication indicates the DFTs-OFDM waveform, the transmitting end performs diversity transmission, and searches a precoding matrix that is for diversity transmission for a precoding matrix corresponding to the precoding matrix index.

In an example, when a limitation condition of a total transmit power of a single antenna port is satisfied, a power of a null resource on the same antenna port may be for increasing a power of non-zero data on the antenna port. Therefore, whether diversity transmission is performed may be indicated by a data power increasing value (which is also referred to as a power boosting (power boosting) value). The transmitting end may determine, based on the data power increasing value (or the power boosting value) indicated in the indication information, whether diversity is performed, to further determine the precoding matrix. For example, a threshold is set. When the data power increasing value (or the power boosting value) is greater than or equal to the threshold, diversity transmission is performed. When the data power increasing value (or the power boosting value) is less than or equal to the threshold, diversity transmission is not performed. The threshold may be, for example, 0 dB or 1 dB. For example, when the data power increasing value (or the power boosting value) is 0 dB, the transmitting end does not perform diversity transmission. When the data power increasing value (or the power boosting value) is greater than 0 dB, the transmitting end performs diversity transmission.

In an example, diversity transmission may be associated with a signal-to-noise ratio (signal-to-noise ratio, SNR). For example, when the SNR is greater than or equal to a specified threshold, diversity transmission is performed, and when the SNR is less than or equal to the specified threshold, diversity transmission is not performed. In this case, the diversity transmission indication may be an indication indicating a value of the SNR. When determining that the SNR is greater than or equal to the specified threshold, the transmitting end performs diversity transmission. When determining that the SNR is less than or equal to the specified threshold, the transmitting end does not perform diversity transmission, to further determine the precoding matrix. The threshold may be specified in a protocol, or may be negotiated by both the transmitting end and the receiving end.

In an example, diversity transmission may be associated with a scheduled modulation and coding scheme (modulation and coding scheme, MCS). It is specified that, in some modulation manners, diversity transmission is performed, and, in some modulation manners, diversity transmission is not performed. For example, when a modulation manner indicated by the MCS is pi/2 BPSK, diversity transmission is performed. Otherwise, diversity transmission is not performed. For another example, when a modulation manner indicated by the MCS is pi/2 BPSK or QPSK, diversity transmission is performed. Otherwise, diversity transmission is not performed. For another example, the MCS is usually a value, and the modulation manner is indicated by the value. For example, when the MCS is less than a specified threshold, diversity transmission is performed. Otherwise, diversity transmission is not performed.

In an example, the indication information includes a precoding matrix index and an identifier of a precoding matrix set. A precoding matrix in the identified precoding matrix set is for diversity transmission. In this way, the transmitting end may search the precoding matrix set identified by the identifier for a precoding matrix corresponding to the precoding matrix index.

In addition, a device sending the indication information may perform channel estimation in a unit of a subband or in a full band, traverse all precoding matrices that are allowed to be used, select a precoding matrix corresponding to a lowest demodulation threshold (or equivalently, a highest SNR), and deliver an index of the precoding matrix to the transmitting end.

It is described above that the transmitting end receives the indication information sent by the receiving end or another device, to determine the precoding matrix. In another example, the transmitting end may alternatively determine the precoding matrix, and send, to the receiving end, indication information for determining the precoding matrix.

When indicating the precoding matrix index, different groups of antenna ports may separately indicate the precoding matrix index. For example, a TPMI of a group 0 {ant0, ant1} of antenna ports is: TPMI 0={$T_{0,0}$, $T_{0,1}$, ...,

$T_{0, i}, ...$. A TPMI of another group 1 {ant2, ant3} of antenna ports is: TPMI 1=$\{T_{1, 0}, T_{1, 1}, ..., T_{1, j}, ...\}$. i and j are subband numbers (indexes). $0<=i<=N_{sb0}-1$, $0<j<=N_{sb1}-1$. $N_{sb0}$ and $N_{sb1}$ are separately quantities of subbands grouped in a scheduled bandwidth for the two groups of antenna ports, and may be equal or may not be equal. If $N_{sb0}=1$ or $N_{sb1}=1$, the TMPI in the corresponding group of antenna ports is a full-band TPMI. 0 in $T_{0, 1}$ is an index (number) of a group of antenna ports. To be specific, the 1st value in a subscript of T is the index (number) of the group of antenna ports, and the 2nd value in the subscript is a subband number (index).

In addition, precoding matrices of a plurality of groups of antenna ports may be combined into an entire precoding matrix, and one precoding matrix index indicates the precoding matrices respectively corresponding to the plurality of groups of antenna ports. For example, if precoding matrices of two groups of antenna ports are combined into a whole, and a size of the precoding matrix for each group of antenna ports is 2*2, a size of an overall precoding matrix obtained after combination is 4*4.

For example, the overall precoding matrix is:

$$\begin{bmatrix} TPMI0_{00} & TPMI0_{01} & 0 & 0 \\ TPMI0_{10} & TPMI0_{11} & 0 & 0 \\ 0 & 0 & TPMI1_{00} & TPMI1_{01} \\ 0 & 0 & TPMI1_{10} & TPMI1_{11} \end{bmatrix}$$

or

$$\begin{bmatrix} TPMI0_{00} & TPMI0_{01} & 0 & 0 \\ 0 & 0 & TPMI1_{00} & TPMI1_{01} \\ TPMI0_{10} & TPMI0_{11} & 0 & 0 \\ 0 & 0 & TPMI1_{10} & TPMI1_{11} \end{bmatrix}$$

Step 306: The transmitting end sends the symbol corresponding to each antenna port.

For example, the transmitting end may first perform first processing on the symbol corresponding to each antenna port, and then send the symbol. The first processing may further include, but is not limited to, subcarrier mapping, inverse discrete Fourier transform, inverse fast Fourier transform (inverse fast Fourier transform, IFFT), cyclic prefix (cyclic prefix, CP) addition, power adjustment, and the like. For the processing processes, refer to existing processing processes, and details are not described.

During subcarrier mapping, the transmitting end maps the symbol corresponding to each antenna port to a subcarrier corresponding to the antenna port. The subcarrier corresponding to the antenna port is a subcarrier used by the antenna port to send the symbol in step 306. Subcarriers corresponding to any two groups of antenna ports may be the same, may be different, may completely overlap, or may partially overlap. The symbol in step 306 includes a valid signal and an invalid signal. The valid signal is a signal corresponding to the modulation symbol, and the wireless signal is a signal corresponding to the preset symbol added in the extension process.

For example, in FIG. 4a, the valid symbol $D_1$ is at an even-numbered location in $E_1$, and the valid symbol $D_2$ is at an odd-numbered location in $E_2$. In this case, the valid symbol in $E_1$ occupies an even-numbered subcarrier, and the valid symbol in $E_2$ occupies an odd-numbered subcarrier. When the precoding matrix in step 305 is $\begin{bmatrix} 1 & 0 \\ 0 & 1 \end{bmatrix}$, the valid signal in a signal sent on the antenna port ant0 occupies an even-numbered subcarrier in the scheduled bandwidth, and the valid signal in a signal sent on the antenna port ant1 occupies an odd-numbered subcarrier in the scheduled bandwidth. During extension, that the locations of the s groups of modulation symbols corresponding to the gth group of antenna ports in the s groups of extended symbols do not overlap locations of at least one group of modulation symbols corresponding to any other group of antenna ports in the at least one group of extended symbols is satisfied. Therefore, it can be ensured that an intersection set of subcarrier sets for transmitting a valid signal on any two groups of antenna ports is an empty set, so that diversity transmission is implemented. In addition, a plurality of modulation symbols are mapped to a plurality of groups. A same code block may be mapped to different groups by using inter-group interleaving, and further mapped to different frequency domain resources or different antennas, so that more robust and stable decoding performance is implemented. In addition, a diversity in frequency domain may be converted into a diversity on an antenna by using precoding, so that simultaneous diversity in space domain and frequency domain can be implemented, and a diversity gain is improved. In addition, precoding between different groups of antenna ports is independent of each other and does not affect each other. A characteristic of incoherence between antenna ports is used, so that performance is ensured, and a precoding dimension is reduced, and processing complexity of the transmitting end is reduced.

The following describes related content of first-level precoding.

The foregoing step 305 describes a process of second-level precoding. Second-level precoding in step 305 is for mapping the extended symbols to different antenna ports. Optionally, after step 304 and before precoding in step 305, first-level precoding may be further performed on v groups of extended symbols. A size of a precoding matrix for first-level precoding is v*v. An element in the precoding matrix for first-level precoding is 0 and/or 1. In an example, v=M. In an example, v is a quantity of antenna ports included in a group of antenna ports. First-level precoding is for selecting a group of antenna ports or an antenna port. It may also be understood as that after step 304 and before precoding in step 305, the transmitting end determines an antenna port or a group of antenna ports corresponding to each group of extended symbols.

For example, in FIG. 4a and FIG. 4b, selection of an antenna port is implemented through first-level precoding, and in FIG. 4c, FIG. 4d, and FIG. 4e, selection of a group of antenna ports is implemented through first-level precoding. Detailed descriptions are provided below with reference to FIG. 4a, FIG. 4b, FIG. 4c, FIG. 4d, and FIG. 4e. A precoding matrix of first-level precoding and a precoding matrix of second-level precoding below are merely examples, and should not constitute a limitation on this application.

For example, in FIG. 4a, when first-level precoding is not performed, when a precoding matrix of second-level precoding is $\begin{bmatrix} 1 & 0 \\ 0 & 1 \end{bmatrix}$, $E_1$ corresponds to $F_1$. To be specific, $E_1$ is mapped to the antenna port ant0. $E_2$ corresponds to $F_2$. To be specific, $E_2$ is mapped to the antenna port ant1. When first-level precoding is performed, if a precoding matrix of first-level precoding is $\begin{bmatrix} 1 & 0 \\ 0 & 1 \end{bmatrix}$, $E_1'=E_1$, and $E_2'=E_2$. $E_1$ is still mapped to the antenna port ant0, and $E_2$ is mapped to the antenna port ant1. If the precoding matrix of first-level precoding is $\begin{bmatrix} 0 & 1 \\ 1 & 0 \end{bmatrix}$, $E_1'=E_2$, and $E_2'=E_1$. To be specific, $E_1$ is mapped to the antenna port ant1, and $E_2$ is mapped to the antenna port ant0.

In addition, the precoding matrix of the first-level precoding in FIG. 4a also implements exchange of valid resources of different antenna ports. A location of the valid symbol $D_1$ in $E_1$ is different from a location of the valid symbol $D_2$ in $E_2$. Therefore, during frequency domain resource (subcarrier) mapping, the valid symbol in $E_1$ and the valid symbol in $E_2$ occupy different frequency domain resources. For example, the valid symbol $D_1$ is at an even-numbered location in $E_1$, and the valid symbol $D_2$ is at an odd-numbered location in $E_2$. In this case, the valid symbol in $E_1$ occupies an even-numbered subcarrier, and the valid symbol in $E_2$ occupies an odd-numbered subcarrier. When the precoding matrix of second-level precoding is $\begin{bmatrix} 1 & 0 \\ 0 & 1 \end{bmatrix}$, when first-level precoding is not performed, a valid resource occupied by a signal sent on the antenna port ant0 is an even-numbered subcarrier, and a valid resource occupied by a signal sent on the antenna port ant1 is an odd-numbered subcarrier. When the precoding matrix of second-level precoding is $\begin{bmatrix} 1 & 0 \\ 0 & 1 \end{bmatrix}$, when first-level precoding is performed, when the precoding matrix of first-level precoding is $\begin{bmatrix} 1 & 0 \\ 0 & 1 \end{bmatrix}$, a valid resource occupied by a signal sent on the antenna port 0 is an even-numbered subcarrier, and a valid resource occupied by a signal sent on the antenna port 1 is an odd-numbered subcarrier. When the precoding matrix of first-level precoding is $\begin{bmatrix} 0 & 1 \\ 1 & 0 \end{bmatrix}$, a valid resource occupied by a signal sent on the antenna port 0 is an odd-numbered subcarrier, and a valid resource occupied by a signal sent on the antenna port 1 is an even-numbered subcarrier. That is, exchange of valid resources of different antenna ports is implemented through first-level precoding.

In FIG. 4b, there are two groups of antenna ports. For each group of antenna ports, refer to the descriptions in FIG. 4a. In other words, each group of antenna ports in FIG. 4b is similar to that in FIG. 4a, and the two groups of antenna ports are not considered as a whole. A precoding matrix of first-level precoding in FIG. 4b is a 2*2 matrix instead of a 4*4 matrix.

In FIG. 4c, first-level precoding may implement selection of a group of antenna ports. A principle is similar to that described in FIG. 4a. If a precoding matrix of first-level precoding is $\begin{bmatrix} 1 & 0 \\ 0 & 1 \end{bmatrix}$, $E_1'=E_1$, and $E_2'=E_2$. To be specific, $E_1$ is mapped to the first group of antenna ports (ant0 and ant1), and $E_2$ is mapped to the second group of antenna ports (ant2 and ant3). If the precoding matrix of first-level precoding is $\begin{bmatrix} 0 & 1 \\ 1 & 0 \end{bmatrix}$, $E_1'=E_2$, and $E_2'=E_1$. To be specific, $E_1$ is mapped to the second group of antenna ports (ant2 and ant3), and $E_2$ is mapped to the first group of antenna ports (ant0 and ant1).

In FIG. 4d, first-level precoding may implement selection of a group of antenna ports. A principle is similar to that in FIG. 4a.

When a precoding matrix of first-level precoding is a unit matrix, $E_1'=E_1$, $E_2',=E_2$, $E_3'=E_3$, and $E_4'=E_4$.

When the precoding matrix of first-level precoding is $\begin{bmatrix} 0 & 0 & 1 & 0 \\ 0 & 0 & 0 & 1 \\ 1 & 0 & 0 & 0 \\ 0 & 1 & 0 & 0 \end{bmatrix}$, $E_1'=E_3$, $E_2'=E_4$, $E_3'=E_1$, and $E_4'=E_2$.

When the precoding matrix of first-level precoding is $\begin{bmatrix} 0 & 0 & 0 & 1 \\ 0 & 0 & 1 & 0 \\ 0 & 1 & 0 & 0 \\ 1 & 0 & 0 & 0 \end{bmatrix}$, $E_1'=E_4$, $E_2'=E_3$, $E_3'=E_2$, and $E_4'=E_1$.

In FIG. 4e, precoding matrix of first-level precoding may implement selection of a group of antenna ports. A principle is similar to that in FIG. 4a.

When the precoding matrix of first-level precoding is a unit matrix, $E_1$ and $E_2$ correspond to the 1st group of antenna ports (ant0 and ant1), and $E_3$ corresponds to the 2nd group of antenna ports (ant2 and ant3) (which is not shown in FIG. 4e).

When the precoding matrix of first-level precoding is $\begin{bmatrix} 0 & 0 & 1 \\ 0 & 1 & 0 \\ 1 & 0 & 0 \end{bmatrix}$, $E_1'=E_3$, $E_2'=E_2$, and $E_3'=E_1$.

When the precoding matrix of first-level precoding is $\begin{bmatrix} 0 & 0 & 1 \\ 1 & 0 & 0 \\ 0 & 1 & 0 \end{bmatrix}$, $E_1'=E_3$, $E_2'=E_1$, and $E_3'=E_2$.

With reference to the several examples described above, when the precoding matrix of first-level precoding is selected, to implement antenna port switching, the precoding matrix of first-level precoding needs to satisfy the following characteristic 3:

If an $i^{th}$ group of extended symbols is sent on a $j^{th}$ antenna port, a $j^{th}$ element in an $i^{th}$ row of the precoding matrix of first-level precoding is non-zero, and another element or block in the $i^{th}$ row is 0.

To implement switching of a group of antenna ports, the precoding matrix of first-level precoding needs to satisfy the following characteristic 4:

If an $i^{th}$ group of extended symbols is sent on a $g^{th}$ group of antenna ports, a block whose coordinate is (i, j) in the precoding matrix of first-level precoding is a non-zero matrix, and another block whose row coordinate is i is a 0 matrix. That a unit whose coordinate is (i, j) is a block is that the coordinate (i, j) is a coordinate of the block.

For example, the precoding matrix of first-level precoding is a block diagonal matrix (which is also referred to as a subblock diagonal matrix) or a block anti-diagonal matrix (which is also referred to as an anti-block diagonal matrix). A block of a diagonal element or a block of an opposing diagonal element in the block diagonal matrix is a unit matrix whose size is a quantity of antenna ports in a group of antenna ports.

A block in the block anti-diagonal matrix is a unit matrix whose size is a quantity of antenna ports in a group of antenna ports.

It can be learned from the foregoing descriptions that, in the foregoing solution, a part of frequency domain resources are occupied when valid signals are transmitted on different antenna ports, and resources occupied when the valid signals are transmitted on at least two antenna ports are different, so that diversity in frequency domain and diversity in space domain are implemented, and a signal demodulation capability is improved. Because only the part of resources are occupied for transmitting the valid signals, in comparison with non-diversity transmission, a quantity of valid resources for transmitting the valid signals is reduced, that is, transport blocks are greatly reduced. Because diversity has an obvious gain, a total transmission capacity may be greater than that in a conventional technology. Because a quantity of resources occupied for diversity is reduced, to be comparable to a transmission capacity in non-diversity transmission, a scheduling modulation and coding scheme MCS also needs to be adjusted synchronously. For example, when a quantity of resources occupied by an antenna port is halved, spectral efficiency corresponding to the MCS needs to be doubled, that is, Qm*CR is doubled. Qm is a modulation order, and a value of Qm is 1, 2, 4, 6, 8, 10, or the like. CR is a coding rate, and a value of CR is greater than 0 and less than 1.

In addition, this application may be used together with another manner of improving coverage. For example, when a modulation manner is enhanced pi/2 BPSK, a transmitted signal corresponding to the modulation manner has a segmentation conjugate symmetry characteristic. Before each group of modulation symbols is extended, a "truncation filtering" (where it should be noted that the truncation filtering is divided into two parts: truncation and filtering) process is performed. A receiving end improves a receiver according to a rule of extension and truncation filtering, and further recovers information. In comparison with a conventional technology (frequency domain spectrum shaping R15: FDSS, frequency domain spectral shaping), spectral efficiency is higher in this method when data demodulation performance is ensured. Alternatively, a bit rate is lower under same spectral efficiency, and coverage is improved. The following describes the "truncation filtering" process in detail.

Optionally, after performing discrete Fourier transform DFT in step 303, and before performing precoding in step 305, the transmitting end may further perform the following "truncation" process for each group of symbols on which DFT is performed:

The transmitting end filters out (or discards or does not map to a subcarrier) the first L1 symbols and/or the last L2 symbols in the $m^{th}$ group of valid signals (the symbols on which DFT is performed or the modulation symbols). L1 is an integer greater than or equal to 1, and L2 is an integer greater than or equal to 1. A value of L1 is determined based on a truncation factor, and a value of L2 is determined based on the truncation factor. Optionally, an absolute value of a difference between L1 and L2 is less than a specified threshold, where the specified threshold is 1 or 2. A ratio of a quantity of remaining symbols in the $m^{th}$ group of valid signals (the symbols on which DFT is performed or the modulation symbols) to a quantity of valid signals in the $m^{th}$ group of valid signals (the symbols on which DFT is performed or the modulation symbols) is equal to the truncation factor, where the truncation factor is less than 1 and greater than 0. Subsequently, "the remaining symbols in the $m^{th}$ group of valid signals" are used as "the $m^{th}$ group of valid signals" to perform a subsequent process.

The "truncation" process may be performed in any step before precoding, and is usually performed after DFT in step 303 and before extension in step 304.

The truncation factor may be indicated by the receiving end. For example, the transmitting end receives indication information, where the indication information indicates the truncation factor. The truncation factor may alternatively be specified in a protocol, and does not need to be indicated by the receiving end.

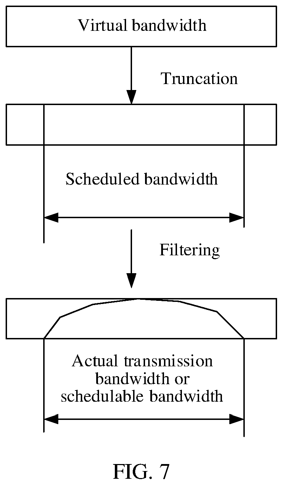

After a "truncation" operation is performed, a "filtering" operation may be performed. For a "filtering" process, refer to a conventional technology. Details are not described. For example, in a possible implementation, filtering is implemented through frequency domain weighting. FIG. 7 is a schematic diagram of truncation filtering. A scheduled bandwidth is greater than a virtual bandwidth.

It is assumed that the scheduled bandwidth is $N_{RE0}$ or $N_{RB0}$, and the virtual bandwidth is $N_{REi}$ or $N_{RBi}$. In a possible implementation, the transmitting end may calculate the virtual bandwidth based on the scheduled bandwidth and the truncation factor. For example, if the truncation factor is $f_{tc}$, the virtual bandwidth may be represented as: $N_{REi}$=rounding ($N_{RE0}/f_{tc}$) or $N_{RBi}$=rounding ($N_{RB0}/f_{tc}$), where rounding is rounding up, rounding down, or rounding off. If the "truncation" process is not performed, in step 301, the transmitting end calculates a size of a transport block based on a quantity of resources included in the scheduled bandwidth, generates a source bit based on the size of the transport block, and performs coding and modulation. If the "truncation" process is performed, in step 301, the transmitting end calculates a size of a transport block based on a quantity of resources included in the virtual bandwidth, generates a source bit based on the size of the transport block, and performs coding and modulation.

Because the scheduled bandwidth is less than the virtual bandwidth, before IFFT is performed, a signal length needs to be reduced or truncated to $N_{RE0}$ or $N_{RB0}$, to match the scheduled bandwidth. In addition, in this process, frequency domain spectrum shaping FDSS may be introduced to further reduce a PAPR, and a frequency domain shaping filtering operation may be implemented by weighting a subcarrier in frequency domain. The foregoing truncation operation and the FDSS operation are combined, that is, truncation filtering in this application. Truncation filtering may alternatively be understood as selected mapping. To be specific, the transmitting end maps only a part of complex sampling points or complex symbols on which DFT is performed to a frequency domain resource. A signal obtained through truncation filtering is sent after operations such as extension, precoding (including second-level precoding, and optionally, further including first-level precoding), mapping, IFFT, and adding a CP are performed.

As shown in FIG. 8, a diversity transmission process is further provided. In the example in FIG. 3, the modulation symbols are first grouped, then the symbols are extended, and the extended signals are precoded. In the example shown in FIG. 8, modulation symbols are first grouped, and precoding is directly performed without extending each group of symbols obtained through grouping. During subsequent subcarrier mapping, subcarriers between groups of antenna ports are orthogonal. In this way, it can be ensured that an intersection set of subcarrier sets of any two groups of antenna ports is an empty set. For other details, refer to each other. Details are not described again. It should be noted that the following steps are merely used to describe a difference between the example in FIG. 8 and the example in FIG. 3, and some same content is not described. For details, refer to the example in FIG. 3.

The following steps are included.

Step 802: A transmitting end groups n modulation symbols into M groups of modulation symbols. A process of step 802 is the same as a process related to step 302 in FIG. 3. For details, refer to the examples of grouping in FIG. 4a, FIG. 4b, FIG. 4c, FIG. 4d, and FIG. 4e. Repeated parts are not described again.

Optionally, step 803: The transmitting end performs discrete Fourier transform DFT on an $m^{th}$ group of modulation symbols, to obtain the $m^{th}$ group of modulation symbols on which DFT is performed. A process of step 803 is the same as a process related to step 303 in FIG. 3. For details, refer to the examples of DFT in FIG. 4a, FIG. 4b, FIG. 4c, FIG. 4d, and FIG. 4e. Repeated parts are not described again.

Optionally, the transmitting end may determine a quantity of group of antenna ports for current diversity transmission. When the n modulation symbols are generated by using a plurality of code blocks, the quantity of group of antenna ports is equal to a quantity of code blocks obtained through rate matching.

Optionally, the transmitting end determines a group of valid symbols corresponding to each group of antenna ports, that is, determines a group of antenna ports corresponding to each group of valid symbols. Different groups of antenna ports correspond to s groups of valid symbols, and different groups of antenna ports correspond to the same or different s. If DFT in step 803 is performed, the valid symbol is a symbol on which DFT is performed. If DFT in step 803 is not performed, the valid symbol is a modulation symbol. For example, in FIG. 4a, $D_1$ and $D_2$ correspond to a group of antenna ports formed by "ant0 and ant1". In FIG. 4c, $D_1$ corresponds to a group of antenna ports formed by "ant0 and ant1", and $D_2$ corresponds to a group of antenna ports formed by "ant2 and ant3". In FIG. 4e, $D_1$ and $D_2$ correspond to a group of antenna ports formed by "ant0 and ant1", and $D_3$ and $D_4$ corresponds to a group of antenna ports formed by "ant2 and ant3". In FIG. 4e, $D_1$ and $D_2$ correspond to a group of antenna ports formed by "ant0 and ant1", and $D_3$ corresponds to a group of antenna ports formed by "ant2 and ant3".

Step 804: The transmitting end performs second-level precoding on the s groups of valid symbols corresponding to the $g^{th}$ group of antenna ports, to obtain a symbol corresponding to each antenna port in the $g^{th}$ group of antenna ports. A process of step 804 is similar to a process of step 305 in FIG. 3. A difference lies in that, in step 305 in FIG. 3, the extended symbols are precoded, while in step 804, the valid symbols (the symbols on which DFT is performed or the modulation symbols) are precoded. For other details, mutually refer to step 305 in FIG. 3. For second-level precoding, refer to the examples of second-level precoding in FIG. 4a, FIG. 4b, FIG. 4c, FIG. 4d, and FIG. 4e. Details are described below. It is noted that this example is an example of a case in which extension and first-level precoding are not included.

In FIG. 4a, $F_1$ and $F_2$ are obtained by performing second-level precoding on $D_1$ and $D_2$, where $F_1$ is a symbol corresponding to ant0, and $F_2$ is a symbol corresponding to ant1.

In FIG. 4b, $F_1$ and $F_2$ are obtained by performing second-level precoding on $D_1$ and $D_2$, where $F_1$ is a symbol corresponding to ant0, and $F_2$ is a symbol corresponding to ant1. $F_3$ and $F_4$ are obtained by performing second-level precoding on $D_3$ and $D_4$, where $F_3$ is a symbol corresponding to ant0, and $F_4$ is a symbol corresponding to ant1.

In FIG. 4c, $F_1$ and $F_2$ are obtained by performing second-level precoding on $D_1$, where $F_1$ is a symbol corresponding to ant0, and $F_2$ is a symbol corresponding to ant1. $F_3$ and $F_4$ are obtained by performing second-level precoding on $D_2$, where $F_3$ is a symbol corresponding to ant0, and $F_4$ is a symbol corresponding to ant1.

In FIG. 4d, $F_1$ and $F_2$ are obtained by performing second-level precoding on $D_1$ and $D_2$, where $F_1$ is a symbol corresponding to ant0, and $F_2$ is a symbol corresponding to ant1. $F_3$ and $F_4$ are obtained by performing second-level precoding on $D_3$ and $D_4$, where $F_3$ is a symbol corresponding to ant0, and $F_4$ is a symbol corresponding to ant1.

In FIG. 4e, $F_1$ and $F_2$ are obtained by performing second-level precoding on $D_1$ and $D_2$, where $F_1$ is a symbol corresponding to ant0, and $F_2$ is a symbol corresponding to ant1. $F_3$ and $F_4$ are obtained by performing second-level precoding on $D_3$, where $F_3$ is a symbol corresponding to ant0, and $F_4$ is a symbol corresponding to ant1.

Step 805: Map the symbol corresponding to each antenna port to a subcarrier corresponding to the antenna port.

Optionally, IFFT, adding a CP, power adjustment, and the like may be further performed, and the symbol is sent. The "subcarrier corresponding to the antenna port" herein is a subcarrier for transmitting a signal on the antenna port, or may be understood as a subcarrier for carrying the symbol obtained in step 804 on the antenna port, instead of all subcarriers in a scheduled bandwidth.

An intersection set of subcarrier sets corresponding to any two groups of antenna ports is an empty set, which may also be understood as that subcarriers corresponding to any two groups of antenna ports do not overlap, are different, or are complementary. This is equivalent to the characteristic 1 and the characteristic 2 in the example in FIG. 3: locations of s groups of modulation symbols corresponding to a $g^{th}$ group of antenna ports in the s groups of extended symbols and locations of at least one group of modulation symbols corresponding to any other group of antenna ports in the at least one group of extended symbols do not overlap, are different, or are complementary..

A subcarrier set corresponding to a group of antenna ports is a subcarrier for transmitting a signal on the group of antenna ports, or may be understood as a subcarrier for carrying the symbol obtained in step 804 on the group of antenna ports, instead of all subcarriers in a scheduled bandwidth.

In an example, for any group of antenna ports, locations of subcarriers corresponding to the group of antenna ports in the scheduled bandwidth are discontinuous.

For example, refer to FIG. 6a. It is assumed that there are two groups of antenna ports. $D_1$ and $D_2$ are subcarriers corresponding to one group of antenna ports respectively, and $E_1$ and $E_2$ are subcarriers in a scheduled bandwidth. The

subcarrier $D_1$ corresponding to one group of antenna ports is a subcarrier at an odd-numbered location in the scheduled bandwidth, and the subcarrier $D_2$ corresponding to the other group of antenna ports is a subcarrier at an even-numbered location in the scheduled bandwidth.

In an example, for any group of antenna ports, locations of subcarriers corresponding to the group of antenna ports in the scheduled bandwidth are continuous.

For example, refer to FIG. 6b. It is assumed that there are two groups of antenna ports. $D_1$ and $D_2$ are subcarriers corresponding to one group of antenna ports respectively, and $E_1$ and $E_2$ are subcarriers in a scheduled bandwidth. The subcarrier $D_1$ corresponding to one group of antenna ports is a subcarrier in a first half of the scheduled bandwidth, and the subcarrier $D_2$ corresponding to the other group of antenna ports is a subcarrier in a second half of the scheduled bandwidth.

In an example, for any group of antenna ports, a part of locations of subcarriers corresponding to the group of antenna ports in the scheduled bandwidth are continuous, and a part of the locations are discontinuous.

For another example, refer to FIG. 6c. It is assumed that there are three groups of antenna ports, and $D_1$, $D_2$, and $D_3$ are subcarriers corresponding to one group of antenna ports respectively. $E_1$, $E_2$, and $E_3$ are subcarriers in a scheduled bandwidth. $D_1$ is a subcarrier at the 1st location, the 2nd location, the 7th location, the 8th location, and the like in the scheduled bandwidth, $D_2$ is subcarriers at the 3rd location, the 4th location, the 9th location, the 10th location, and the like in the scheduled bandwidth, and $D_3$ is a subcarrier at the 5th location, the 6th location, the 11th location, the 12th location, and the like in the scheduled bandwidth.

Optionally, for a group of antenna ports, an intersection set of subcarrier sets corresponding to any two antenna ports is an empty set. It may also be understood as that for a group of antenna ports, subcarriers corresponding to any two antenna ports do not overlap, are different, or are complementary. In an example, in a group of antenna ports, for any antenna port, locations of subcarriers corresponding to the antenna port in subcarriers corresponding to the group of antenna ports are continuous. Alternatively, locations of subcarriers corresponding to the antenna port in subcarriers corresponding to the group of antenna ports are discontinuous. Alternatively, a part of locations of subcarriers corresponding to the antenna port in subcarriers corresponding to the group of antenna ports are continuous, and a part of the locations are discontinuous. FIG. 6a, FIG. 6b, and FIG. 6c may still be used as an example for description. In FIG. 6a, FIG. 6b, and FIG. 6c, $D_1$, $D_2$, and $D_3$ respectively represent subcarriers corresponding to one antenna port, and $E_1$, $E_2$, and $E_3$ represent subcarrier sets corresponding to one group of antenna ports.

Optionally, for a group of antenna ports, subcarriers corresponding to any two antenna ports are completely the same. In a group of antenna ports, locations of subcarriers corresponding to any two antenna ports in subcarriers corresponding to the group of antenna ports are the same.

Optionally, before step 804 is performed, the following may be further performed: The transmitting end performs first-level precoding on v groups of valid symbols. For a specific example and process, refer to the foregoing descriptions. Details are not described herein again.

Optionally, before step 804 is performed, a "truncation" process may be further performed.

The transmitting end filters out (or discards) the first L1 symbols and/or the last L2 symbols in the mth group of valid signals (the symbols on which DFT is performed or the modulation symbols). For a specific example and process, refer to the foregoing descriptions. Details are not described herein again.

In the foregoing solution, a demodulation reference signal (Demodulation reference signal, DMRS) signal is not considered. Before precoding, a DMRS is mapped to a corresponding RE according to a rule corresponding to a DMRS port number. In other words, a signal before precoding includes a DMRS, data, and a PTRS.

The foregoing describes a plurality of diversity communication processes performed by the transmitting end. A diversity communication process performed by the receiving end is an inverse process of the transmitting end, and details are not described again.

The foregoing describes the method in embodiments of this application, and the following describes an apparatus in embodiments of this application. The method and the apparatus are based on a same technical idea. The method and the apparatus have similar principles for resolving problems. Therefore, for implementations of the apparatus and the method, refer to each other. Details are not repeated.

In embodiments of this application, the apparatus may be divided into function modules based on the foregoing method examples. For example, each function module may be obtained through division based on each corresponding function, or two or more functions may be integrated into one module. The modules may be implemented in a form of hardware, or may be implemented in a form of a software functional module. It should be noted that, in this embodiment of this application, module division is an example, and is merely a logical function division. In a specific implementation, another division manner may be used.

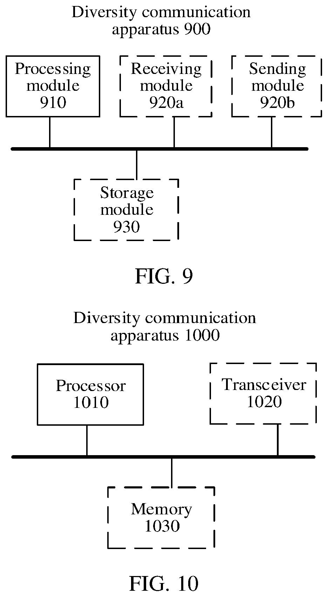

Based on a same technical concept as the foregoing method, FIG. 9 is a schematic diagram of a structure of a diversity communication apparatus 900. The apparatus 900 may be a transmitting end, or may be a chip or a function unit used in a transmitting end. The apparatus 900 has any function of the transmitting end in the foregoing method. For example, the apparatus 900 can perform steps performed by the transmitting end in the methods in FIG. 2, FIG. 3, FIG.

4a, FIG. 4b, FIG. 4c, FIG. 4d, and FIG. 8.

The apparatus 900 may include a processing module 910, and optionally, further include a receiving module 920a, a sending module 920b, and a storage module 930. The processing module 910 may be separately connected to the storage module 930, the receiving module 920a, and the sending module 920b. The storage module 930 may alternatively be connected to the receiving module 920a and the sending module 920b.

The receiving module 920a may perform a receiving action performed by the transmitting end in the foregoing method embodiments.

The sending module 920b may perform a sending action performed by the transmitting end in the foregoing method embodiments.

The processing module 910 may perform an action other than the sending action and the receiving action in actions performed by the transmitting end in the foregoing method embodiments.

In an example, the processing module 910 is configured to divide n modulation symbols into M groups of modulation symbols, where M is an integer greater than or equal to 2, and n is an integer greater than or equal to 2; add one or more preset symbols to an m$^{th}$ group of modulation symbols, to obtain the m$^{th}$ group of extended symbols, where a value of m is an integer from 1 to M, and locations of s groups of modulation symbols corresponding to a g$^{th}$ group of antenna ports in the s groups of extended symbols do not overlap locations of at least one group of modulation symbols corresponding to any other group of antenna ports in the at least one group of extended symbols; and perform second-level precoding on the s groups of extended symbols corresponding to the g$^{th}$ group of antenna ports, to obtain a symbol corresponding to each antenna port in the g$^{th}$ group of antenna ports, where, in second-level precoding, a dimension of a precoding matrix for a g$^{th}$ group of precoding antenna ports is related to s and a quantity of antenna ports included in the g$^{th}$ group of antenna ports, and s is an integer greater than or equal to 1 and less than or equal to M. The sending module 920b is configured to send the symbol corresponding to each antenna port.

In an example, the processing module 910 is further configured to perform discrete Fourier transform DFT on the m$^{th}$ group of modulation symbols.

In an example, when being configured to add one or more preset symbols to an m$^{th}$ group of modulation symbols, to obtain the m$^{th}$ group of extended symbols, the processing module 910 is specifically configured to add x preset symbols to every y modulation symbols in the m$^{th}$ group of modulation symbols, to obtain the m$^{th}$ group of extended symbols, where y is an integer greater than or equal to 1, and x is an integer greater than or equal to 1.

In an example, the receiving module 920a is configured to receive indication information, where the indication information is for determining the precoding matrix.

In an example, the processing module 910 is further configured to perform first-level precoding on v groups of extended symbols, where a size of a precoding matrix for first-level precoding is v*v, and an element in the precoding matrix for first-level precoding is 0 and/or 1.

In an example, the processing module 910 is further configured to generate a modulation symbol by using the following formula:

$$d(i) = \frac{e^{j\frac{\pi}{2}\left(\left\lfloor \frac{i}{M} \right\rfloor mod\, 2\right)}}{\sqrt{2}}\left(\left(1 - 2b(i)\right) + j\left(1 - 2b(i)\right)\right),$$

where b represents a bit sequence, $b(i)$ is an i$^{th}$ bit in the bit sequence, i is an integer greater than or equal to 0, d(i) is a modulation symbol corresponding to $b(i)$, $\lfloor i/M \rfloor$ represents rounding down i/M to the nearest integer, and j is an imaginary part.

In an example, the processing module 910 is further configured to filter out the first L1 symbols and/or the last L2 symbols in the m$^{th}$ group of modulation symbols, where L1 is an integer greater than or equal to 1, and L2 is an integer greater than or equal to 1.

In an example, the receiving module 920a is configured to receive indication information, where the indication information indicates a truncation factor, and a value of L1 and a value of L2 are both determined based on the truncation factor.

In an example, the processing module 910 is configured to divide n modulation symbols into M groups of modulation symbols, where M is an integer greater than or equal to 2, and n is an integer greater than or equal to 2; perform second-level precoding on s groups of modulation symbols corresponding to a g$^{th}$ group of antenna ports, to obtain a symbol corresponding to each antenna port in the g$^{th}$ group of antenna ports, where, in second-level precoding, a dimension of a precoding matrix for a g$^{th}$ group of precoding antenna ports is related to s and a quantity of antenna ports included in the g$^{th}$ group of antenna ports, and s is an integer greater than or equal to 1 and less than or equal to M; and map the symbol corresponding to each antenna port to a subcarrier corresponding to the antenna port, where subcarriers corresponding to any two groups of antenna ports do not overlap. The sending module 920b is configured to send the symbol corresponding to each antenna port.

In an example, the processing module 910 is further configured to perform first-level precoding on v groups of modulation symbols, where a size of a precoding matrix for first-level precoding is v*v, and an element in the precoding matrix for first-level precoding is 0 and/or 1.

In an example, the processing module 910 is further configured to filter out the first L1 symbols and/or the last L2 symbols in the $m^{th}$ group of modulation symbols, where L1 is an integer greater than or equal to 1, and L2 is an integer greater than or equal to 1.

When the apparatus is a baseband apparatus, the receiving module 920a and the sending module 920b may be an external communication interface of the baseband apparatus. When the apparatus is not a baseband apparatus, the receiving module 920a and the sending module 920b may be an antenna or an antenna port.

In an example, the storage module 930 may store computer-executable instructions of the method performed by the transmitting end, so that the processing module 910, the receiving module 920a, and the sending module 920b perform the method performed by the transmitting end in the foregoing example.

The receiving module 920a and the sending module 920b may alternatively be integrated together, and are defined as a transceiver module.

For example, the storage module may include one or more memories. The memory may be a component configured to store a program or data in one or more devices or circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

The foregoing describes the apparatus used in the transmitting end in embodiments of this application, and the following describes a possible product form of the apparatus used in the transmitting end. It should be understood that any form of product having the feature of the apparatus used in the transmitting end described in FIG. 9 falls within the protection scope of this application. It should be further understood that the following description is merely an example, and should not be limited to a product form of the apparatus used in the transmitting end in embodiments of this application.

In a possible product form, the apparatus may be implemented by using a general bus architecture.

FIG. 10 is a schematic block diagram of a diversity communication apparatus 1000. The apparatus 1000 may be a transmitting end, or may be a chip used in the transmitting end. It should be understood that the apparatus has any function of the transmitting end in the foregoing method. For example, the apparatus 1000 can perform steps performed by the transmitting end in the methods in FIG. 2, FIG. 3, FIG. 4a, FIG. 4b, FIG. 4c, FIG. 4d, and FIG. 8. The apparatus 1000 may include a processor 1010, and optionally, further include a transceiver 1020 and a memory 1030. The transceiver 1020 may be configured to receive a program or instructions and transmit the program or the instructions to the processor 1010. Alternatively, the transceiver 1020 may be configured to perform communication interaction between the apparatus 1000 and another communication device, for example, exchange control signaling and/or service data. The transceiver 1020 may be a code and/or data read/write transceiver, or the transceiver 1020 may be a signal transmission transceiver between the processor and a transceiver machine. The processor 1010 and the memory 1030 are electrically coupled.

For example, the memory 1030 is configured to store a computer program The processor 1010 may be configured to invoke the computer program or the instructions stored in the memory 1030, to perform the method performed by the transmitting end in the foregoing example, or perform, by using the transceiver 1020, the method performed by the transmitting end in the foregoing example.

The processing module 910 in FIG. 9 may be implemented by using the processor 1010.

The receiving module 920a and the sending module 920b in FIG. 9 may be implemented by using the transceiver 1020. Alternatively, the transceiver 1020 is divided into a receiver and a transmitter. The receiver performs a function of the receiving module, and the transmitter performs a function of the sending module.

The storage module 930 in FIG. 9 may be implemented by using the memory 1030.

In a possible product form, the apparatus may be implemented by a general-purpose processor (where the general-purpose processor may also be referred to as a chip or a chip system).

In a possible implementation, the general-purpose processor that implements the apparatus used in the transmitting end includes a processing circuit (the processing circuit may also be referred to as a processor) and an input/output interface that is connected to and communicates with the processing circuit. Optionally, the apparatus further includes a storage medium (where the storage medium may also be referred to as a memory). The storage medium is configured to store instructions executed by the processing circuit, to perform the method executed by the transmitting end in the foregoing example.

The processing module 910 in FIG. 9 may be implemented by using the processing circuit.

The receiving module 920a and the sending module 920b in FIG. 9 may be implemented by using an input/output interface. Alternatively, the input/output interface is divided into an input interface and an output interface. The input interface performs a function of the receiving module, and the output interface performs a function of the sending module.

The storage module 930 in FIG. 9 may be implemented by using a storage medium.

In a possible product form, the apparatus in this embodiment of this application may alternatively be implemented by using the following: one or more FPGAs (field programmable gate arrays), a PLD (programmable logic device), a controller, a state machine, gate logic, a discrete hardware component, any other proper circuit, or any combination of circuits that can perform various functions described in this application.

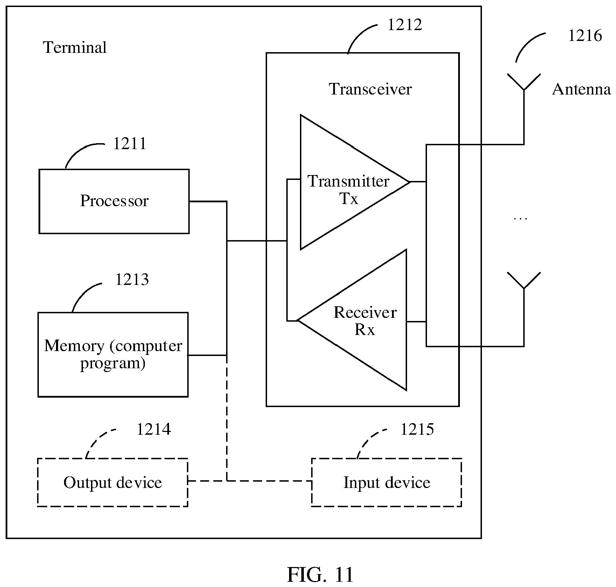

FIG. 11 is a schematic diagram of a structure of a transmitting end according to an embodiment of this application. The transmitting end may be, for example, a terminal.

The terminal includes at least one processor 1211 and at least one transceiver 1212. In a possible example, the terminal may further include at least one memory 1213, an output device 1214, an input device 1215, and one or more antennas 1216. The processor 1211, the memory 1213, and the transceiver 1212 are connected to each other. The antenna 1216 is connected to the transceiver 1212, and the output device 1214 and the input device 1215 are connected to the processor 1211.

The memory 1213 may exist independently, and is connected to the processor 1211. In another example, the memory 1213 may be integrated with the processor 1211, for example, be integrated into a chip. The memory 1213 can store program code for executing the technical solutions in embodiments of this application, and the processor 1211 controls the execution. Various types of executed computer program code may also be considered as drivers of the processor 1211. For example, the processor 1211 is configured to execute the computer program code stored in the memory 1213, to implement the technical solutions in embodiments of this application.

The transceiver 1212 may be configured to support receiving or sending of a radio frequency signal between terminals, between the terminal and a network device, or between the terminal and another device. The transceiver 1212 may be connected to the antenna 1216. The transceiver 1212 includes a transmitter Tx and a receiver Rx. Specifically, the one or more antennas 1216 may receive a radio frequency signal. The receiver Rx of the transceiver 1212 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter Tx of the transceiver 1212 is further configured to: receive a modulated digital baseband signal or a modulated digital intermediate frequency signal from the processor 1211, convert the modulated digital baseband signal or the digital intermediate frequency signal into a radio frequency signal, and send the radio frequency signal through the one or more antennas 1216. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The processor 1211 may be configured to implement various functions for the terminal, for example, configured to process a communication protocol and communication data, or configured to: control the entire terminal device, execute a software program, and process data of the software program, or configured to assist in completing a computing processing task, for example, graphics and image processing or audio processing. Alternatively, the processor 1211 is configured to implement one or more of the foregoing functions.

The output device 1214 communicates with the processor 1211, and may display information in a plurality of manners.

For example, the output device 1214 may be a liquid crystal display (Liquid Crystal Display, LCD), a light emitting diode (Light Emitting Diode, LED) display device, a cathode ray tube (Cathode Ray Tube, CRT) display device, or a projector (projector),. The input device 1215 communicates with the processor 1211, and may receive an input of a user in a plurality of manners. For example, the input device 1215 may be a mouse, a keyboard, a touchscreen device, or a sensing device.

An embodiment of this application further provides a computer-readable storage medium, storing a computer program. When the computer program is executed by a computer, the computer is enabled to perform the foregoing diversity communication method. In other words, the computer program includes instructions for implementing the foregoing diversity communication method.

An embodiment of this application further provides a computer program product, including computer program code. When the computer program code is run on a computer, the computer is enabled to perform the diversity communication method provided above.

An embodiment of this application further provides a communication system. The communication system includes a transmitting end and a receiving end that perform the foregoing diversity communication method.

In addition, the processor mentioned in embodiments of this application may be a central processing unit (central processing unit, CPU) or a baseband processor. The baseband processor and the CPU may be integrated or separated. Alternatively, the processor may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor, or the like.

The memory in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this application is intended to include but is not limited to these memories and any memory of another proper type.

The transceiver mentioned in embodiments of this application may include an independent transmitter and/or an independent receiver, or the transmitter and the receiver may be integrated. The transceiver may operate according to an indication of a corresponding processor. Optionally, the transmitter may correspond to a transmitter machine in a physical device, and the receiver may correspond to a receiver machine in the physical device.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. In addition, it should be understood that in description of this application, terms such as "first" and "second" are merely used for distinguishing and description, but should not be understood as indicating or implying relative importance, or should not be understood as indicating or implying a sequence.

This application is described with reference to the flowcharts and/or block diagrams of the method, the device (system), and the computer program product according to embodiments of this application. It should be understood that computer programs or instructions may be used to implement each procedure and/or each block in the flowcharts and/or the block diagrams and a combination of procedures and/or blocks in the flowcharts and/or the block diagrams. These computer program or instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

Alternatively, these computer program or instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

Alternatively, the computer program or instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application have been described, a person skilled in the art can make changes and modifications to these embodiments once they learn the basic inventive concept. Therefore, the following claims are intended to be construed as to cover the preferred embodiments and all changes and modifications falling within the scope of this application.

Clearly, a person skilled in the art can make various modifications and variations to embodiments of this application without departing from the spirit and scope of embodiments of this application. In this way, this application is intended to cover these modifications and variations to embodiments of this application provided that they fall within the scope of protection defined by the following claims and their equivalent technologies of this application.

**Claims**

1. A signal transmission method, wherein the method comprises:

    grouping, by a transmitting end, n modulation symbols into M groups of modulation symbols, wherein M is an integer greater than or equal to 2, and n is an integer greater than or equal to 2;
    adding, by the transmitting end, one or more preset symbols to an $m^{th}$ group of modulation symbols, to obtain the $m^{th}$ group of extended symbols, wherein a value of m is an integer from 1 to M, and locations of s groups of modulation symbols corresponding to a $g^{th}$ group of antenna ports in the s groups of extended symbols do not overlap locations of at least one group of modulation symbols corresponding to any other group of antenna ports in the at least one group of extended symbols;

performing, by the transmitting end, second-level precoding on the s groups of extended symbols corresponding to the g$^{th}$ group of antenna ports, to obtain a symbol corresponding to each antenna port in the g$^{th}$ group of antenna ports, wherein in second-level precoding, a dimension of a precoding matrix for a g$^{th}$ group of precoding antenna ports is related to s and a quantity of antenna ports comprised in the g$^{th}$ group of antenna ports, and s is an integer greater than or equal to 1 and less than or equal to M; and

sending, by the transmitting end, the symbol corresponding to each antenna port.

2. The method according to claim 1, wherein in a group of antenna ports, locations of any group of modulation symbols in the group of extended symbols do not overlap locations of another group of modulation symbols in the another group of extended symbols; or

in a group of antenna ports, locations of any group of modulation symbols in the group of extended symbols are the same as locations of another group of modulation symbols in the another group of extended symbols.

3. The method according to claim 1 or 2, wherein before the adding one or more preset symbols to an m$^{th}$ group of modulation symbols, to obtain the m$^{th}$ group of extended symbols, the method further comprises:

performing, by the transmitting end, discrete Fourier transform DFT on the m$^{th}$ group of modulation symbols.

4. The method according to claim 3, wherein a size of the DFT is a quantity of symbols in the m$^{th}$ group of modulation symbols.

5. The method according to any one of claims 1 to 4, wherein M is greater than or equal to a quantity of groups of antenna ports, and M is less than or equal to a sum of quantities of antenna ports in the groups of antenna ports.

6. The method according to any one of claims 1 to 5, wherein locations of the m$^{th}$ group of modulation symbols in the m$^{th}$ group of extended modulation symbols are discontinuous;

locations of the m$^{th}$ group of modulation symbols in the m$^{th}$ group of extended modulation symbols are continuous; or

a part of locations of the m$^{th}$ group of modulation symbols in the m$^{th}$ group of extended modulation symbols are continuous, and the other part of the locations are discontinuous.

7. The method according to any one of claims 1 to 6, wherein the adding, by the transmitting end, one or more preset symbols to an m$^{th}$ group of modulation symbols, to obtain the m$^{th}$ group of extended symbols comprises:

adding, by the transmitting end, x preset symbols to every y modulation symbols in the m$^{th}$ group of modulation symbols, to obtain the m$^{th}$ group of extended symbols, wherein y is an integer greater than or equal to 1, and x is an integer greater than or equal to 1.

8. The method according to claim 7, wherein x is an integer multiple of y.

9. The method according to claim 7 or 8, wherein y is an integer multiple of a quantity of resource elements REs comprised in a resource block group RBG.

10. The method according to any one of claims 1 to 9, wherein the method further comprises:

receiving, by the transmitting end, indication information, wherein the indication information is for determining the precoding matrix.

11. The method according to claim 10, wherein the indication information comprises:

a precoding matrix index, wherein the precoding matrix index indicates a precoding matrix in a precoding matrix set, and the precoding matrix set comprises a precoding matrix for diversity transmission and a precoding matrix for non-diversity transmission;

a precoding matrix index and a diversity transmission indication; or

a precoding matrix index and an identifier of a precoding matrix set, wherein a precoding matrix in the identified precoding matrix set is for diversity transmission.

12. The method according to any one of claims 1 to 10, wherein before the performing, by the transmitting end, second-level precoding on the s groups of extended symbols corresponding to the g$^{th}$ group of antenna ports, to obtain a symbol corresponding to each antenna port in the g$^{th}$ group of antenna ports, the method further comprises:

performing, by the transmitting end, first-level precoding on v groups of extended symbols, wherein a size of a precoding matrix for first-level precoding is v*v, and an element in the precoding matrix for first-level precoding is 0 and/or 1.

13. The method according to claim 11, wherein the precoding matrix for first-level precoding is a block diagonal matrix or a block anti-diagonal matrix.

14. The method according to claim 13, wherein a block in the block diagonal matrix is a unit matrix, and both a quantity of rows and a quantity of columns in the unit matrix are a quantity of antenna ports in a group of antenna ports.

15. The method according to any one of claims 1 to 14, wherein before the grouping, by a transmitting end, n modulation symbols into M groups of modulation symbols, the method further comprises:
generating, by the transmitting end, a modulation symbol by using the following formula:

$$d(i) = \frac{e^{j\frac{\pi}{2}\left(\left\lfloor\frac{i}{M}\right\rfloor mod\, 2\right)}}{\sqrt{2}}\left(\left(1 - 2b(i)\right) + j\left(1 - 2b(i)\right)\right),$$

wherein b represents a bit sequence, $b(i)$ is an $i^{th}$ bit in the bit sequence, i is an integer greater than or equal to 0, d(i) is a modulation symbol corresponding to $b(i)$, $\lfloor i/M \rfloor$ represents rounding down i/M to the nearest integer, and j is an imaginary part.

16. The method according to claim 15, wherein before the adding, by the transmitting end, one or more preset symbols to an $m^{th}$ group of modulation symbols, to obtain the $m^{th}$ group of extended symbols, the method further comprises:
filtering out, by the transmitting end, the first L1 symbols and/or the last L2 symbols in the $m^{th}$ group of modulation symbols, wherein L1 is an integer greater than or equal to 1, and L2 is an integer greater than or equal to 1.

17. The method according to claim 16, wherein the method further comprises:
receiving, by the transmitting end, indication information, wherein the indication information indicates a truncation factor, and a value of L1 and a value of L2 are both determined based on the truncation factor.

18. A signal transmission method, wherein the method comprises:

grouping, by a transmitting end, n modulation symbols into M groups of modulation symbols, wherein M is an integer greater than or equal to 2, and n is an integer greater than or equal to 2;
performing, by the transmitting end, second-level precoding on s groups of modulation symbols corresponding to a $g^{th}$ group of antenna ports, to obtain a symbol corresponding to each antenna port in the $g^{th}$ group of antenna ports, wherein in second-level precoding, a dimension of a precoding matrix for a $g^{th}$ group of precoding antenna ports is related to s and a quantity of antenna ports comprised in the $g^{th}$ group of antenna ports, and s is an integer greater than or equal to 1 and less than or equal to M; and
mapping, by the transmitting end, the symbol corresponding to each antenna port to a subcarrier corresponding to the antenna port, and sending the symbol, wherein subcarriers corresponding to any two groups of antenna ports do not overlap.

19. The method according to claim 18, wherein locations of subcarriers corresponding to any group of antenna ports in a scheduled bandwidth are discontinuous;

locations of subcarriers corresponding to any group of antenna ports in a scheduled bandwidth are continuous; or
a part of locations of subcarriers corresponding to any group of antenna ports in a scheduled bandwidth are continuous, and the other part of the locations are discontinuous.

20. The method according to claim 18 or 19, wherein subcarriers corresponding to any two antenna ports in a group of antenna ports do not overlap; or subcarriers corresponding to any two antenna ports in a group of antenna ports are the same.

21. The method according to any one of claims 18 to 20, wherein before the performing, by the transmitting end, second-level precoding on s groups of modulation symbols corresponding to a $g^{th}$ group of antenna ports, to obtain a symbol corresponding to each antenna port in the g$^{th}$ group of antenna ports, the method further comprises:
performing, by the transmitting end, discrete Fourier transform DFT on an m$^{th}$ group of modulation symbols.

22. The method according to claim 21, wherein a size of the DFT is a quantity of symbols in the m$^{th}$ group of modulation symbols.

23. The method according to any one of claims 18 to 22, wherein M is greater than or equal to a quantity of groups of antenna ports, and M is less than or equal to a sum of quantities of antenna ports in the groups of antenna ports.

24. The method according to any one of claims 18 to 23, wherein the method further comprises:
receiving, by the transmitting end, indication information, wherein the indication information is for determining the precoding matrix.

25. The method according to claim 24, wherein the indication information comprises:

a precoding matrix index, wherein the precoding matrix index indicates a precoding matrix in a precoding matrix set, and the precoding matrix set comprises a precoding matrix for diversity transmission and a precoding matrix for non-diversity transmission;
a precoding matrix index and a diversity transmission indication; or
a precoding matrix index and an identifier of a precoding matrix set, wherein a precoding matrix in the identified precoding matrix set is for diversity transmission.

26. The method according to any one of claims 18 to 25, wherein before the performing, by the transmitting end, second-level precoding on s groups of modulation symbols corresponding to a g$^{th}$ group of antenna ports, to obtain a symbol corresponding to each antenna port in the g$^{th}$ group of antenna ports, the method further comprises:
performing, by the transmitting end, first-level precoding on v groups of modulation symbols, wherein a size of a precoding matrix for first-level precoding is v*v, and an element in the precoding matrix for first-level precoding is 0 and/or 1.

27. The method according to claim 26, wherein the precoding matrix for first-level precoding is a block diagonal matrix or a block anti-diagonal matrix.

28. The method according to claim 27, wherein a block in the block diagonal matrix is a unit matrix, and both a quantity of rows and a quantity of columns in the unit matrix are a quantity of antenna ports in a group of antenna ports.

29. The method according to any one of claims 18 to 28, wherein before the grouping, by a transmitting end, n modulation symbols into M groups of modulation symbols, the method further comprises:
generating, by the transmitting end, a modulation symbol by using the following formula:

$$d(i) = \frac{e^{j\frac{\pi}{2}\left(\left\lfloor\frac{i}{M}\right\rfloor mod\, 2\right)}}{\sqrt{2}}\left(\left(1 - 2b(i)\right) + j\left(1 - 2b(i)\right)\right),$$

wherein b represents a bit sequence, b(i) is an i$^{th}$ bit in the bit sequence, i is an integer greater than or equal to 0, d(i) is a modulation symbol corresponding to $b(i)$, $\lfloor i/M \rfloor$ represents rounding down i/M to the nearest integer, and j is an imaginary part.

30. The method according to claim 29, wherein before the performing, by the transmitting end, second-level precoding on s groups of modulation symbols corresponding to a g$^{th}$ group of antenna ports, to obtain a symbol corresponding to each antenna port in the g$^{th}$ group of antenna ports, the method further comprises:
filtering out, by the transmitting end, the first L1 symbols and/or the last L2 symbols in the m$^{th}$ group of modulation symbols, wherein L1 is an integer greater than or equal to 1, and L2 is an integer greater than or equal to 1.

31. The method according to claim 30, wherein the method further comprises:
receiving, by the transmitting end, indication information, wherein the indication information indicates a truncation factor, and a value of L1 and a value of L2 are both determined based on the truncation factor.

**32.** A signal transmission apparatus, wherein the apparatus comprises:

a processing module, configured to group n modulation symbols into M groups of modulation symbols, wherein M is an integer greater than or equal to 2, and n is an integer greater than or equal to 2; add one or more preset symbols to an $m^{th}$ group of modulation symbols, to obtain the $m^{th}$ group of extended symbols, wherein a value of m is an integer from 1 to M, and locations of s groups of modulation symbols corresponding to a $g^{th}$ group of antenna ports in the s groups of extended symbols do not overlap locations of at least one group of modulation symbols corresponding to any other group of antenna ports in the at least one group of extended symbols; and perform second-level precoding on the s groups of extended symbols corresponding to the $g^{th}$ group of antenna ports, to obtain a symbol corresponding to each antenna port in the $g^{th}$ group of antenna ports, wherein, in second-level precoding, a dimension of a precoding matrix for a $g^{th}$ group of precoding antenna ports is related to s and a quantity of antenna ports comprised in the $g^{th}$ group of antenna ports, and s is an integer greater than or equal to 1 and less than or equal to M; and
a sending module, configured to send the symbol corresponding to each antenna port.

**33.** The apparatus according to claim 32, wherein, in a group of antenna ports, locations of any group of modulation symbols in the group of extended symbols do not overlap locations of another group of modulation symbols in the another group of extended symbols; or
in a group of antenna ports, locations of any group of modulation symbols in the group of extended symbols are the same as locations of another group of modulation symbols in the another group of extended symbols.

**34.** The apparatus according to claim 32 or 33, wherein the processing module is further configured to perform discrete Fourier transform DFT on the $m^{th}$ group of modulation symbols.

**35.** The apparatus according to claim 34, wherein a size of the DFT is a quantity of symbols in the $m^{th}$ group of modulation symbols.

**36.** The apparatus according to any one of claims 32 to 35, wherein M is greater than or equal to a quantity of groups of antenna ports, and M is less than or equal to a sum of quantities of antenna ports in the groups of antenna ports.

**37.** The apparatus according to any one of claims 32 to 36, wherein locations of the $m^{th}$ group of modulation symbols in the $m^{th}$ group of extended modulation symbols are discontinuous;

locations of the $m^{th}$ group of modulation symbols in the $m^{th}$ group of extended modulation symbols are continuous; or
a part of locations of the $m^{th}$ group of modulation symbols in the $m^{th}$ group of extended modulation symbols are continuous, and the other part of the locations are discontinuous.

**38.** The apparatus according to any one of claims 32 to 37, wherein when being configured to add one or more preset symbols to an $m^{th}$ group of modulation symbols, to obtain the $m^{th}$ group of extended symbols, the processing module is specifically configured to add x preset symbols to every y modulation symbols in the $m^{th}$ group of modulation symbols, to obtain the $m^{th}$ group of extended symbols, wherein y is an integer greater than or equal to 1, and x is an integer greater than or equal to 1.

**39.** The apparatus according to claim 38, wherein x is an integer multiple of y.

**40.** The apparatus according to claim 38 or 39, wherein y is an integer multiple of a quantity of resource elements REs comprised in a resource block group RBG.

**41.** The apparatus according to any one of claims 32 to 40, wherein the apparatus further comprises:
a receiving module, configured to receive indication information, wherein the indication information is for determining the precoding matrix.

**42.** The apparatus according to claim 41, wherein the indication information comprises:

a precoding matrix index, wherein the precoding matrix index indicates a precoding matrix in a precoding matrix set, and the precoding matrix set comprises a precoding matrix for diversity transmission and a precoding matrix for non-diversity transmission;

a precoding matrix index and a diversity transmission indication; or
a precoding matrix index and an identifier of a precoding matrix set, wherein a precoding matrix in the identified precoding matrix set is for diversity transmission.

43. The apparatus according to any one of claims 32 to 42, wherein the processing module is further configured to perform first-level precoding on v groups of extended symbols, wherein a size of a precoding matrix for first-level precoding is v*v, and an element in the precoding matrix for first-level precoding is 0 and/or 1.

44. The apparatus according to claim 43, wherein the precoding matrix for first-level precoding is a block diagonal matrix or a block anti-diagonal matrix.

45. The apparatus according to claim 44, wherein a block in the block diagonal matrix is a unit matrix, and both a quantity of rows and a quantity of columns in the unit matrix are a quantity of antenna ports in a group of antenna ports.

46. The apparatus according to any one of claims 32 to 45, wherein the processing module is further configured to generate a modulation symbol by using the following formula:

$$d(i) = \frac{e^{j\frac{\pi}{2}\left(\left\lfloor\frac{i}{M}\right\rfloor mod\, 2\right)}}{\sqrt{2}}\left(\left(1 - 2b(i)\right) + j\left(1 - 2b(i)\right)\right),$$

wherein b represents a bit sequence, b(i) is an $i^{th}$ bit in the bit sequence, i is an integer greater than or equal to 0, d(i) is a modulation symbol corresponding to $b(i)$, $\lfloor i/M \rfloor$ represents rounding down i/M to the nearest integer, and j is an imaginary part.

47. The apparatus according to claim 46, wherein the processing module is further configured to filter out the first L1 symbols and/or the last L2 symbols in the $m^{th}$ group of modulation symbols, wherein L1 is an integer greater than or equal to 1, and L2 is an integer greater than or equal to 1.

48. The apparatus according to claim 47, wherein the apparatus further comprises:
the receiving module, configured to receive indication information, wherein the indication information indicates a truncation factor, and a value of L1 and a value of L2 are both determined based on the truncation factor.

49. A signal transmission apparatus, wherein the apparatus comprises:

a processing module, configured to group n modulation symbols into M groups of modulation symbols, wherein M is an integer greater than or equal to 2, and n is an integer greater than or equal to 2; perform second-level precoding on s groups of modulation symbols corresponding to a $g^{th}$ group of antenna ports, to obtain a symbol corresponding to each antenna port in the $g^{th}$ group of antenna ports, wherein, in second-level precoding, a dimension of a precoding matrix for a $g^{th}$ group of precoding antenna ports is related to s and a quantity of antenna ports comprised in the $g^{th}$ group of antenna ports, and s is an integer greater than or equal to 1 and less than or equal to M; and map the symbol corresponding to each antenna port to a subcarrier corresponding to the antenna port, wherein subcarriers corresponding to any two groups of antenna ports do not overlap; and
a sending module, configured to send the symbol corresponding to each antenna port.

50. The apparatus according to claim 49, wherein locations of subcarriers corresponding to any group of antenna ports in a scheduled bandwidth are discontinuous;

locations of subcarriers corresponding to any group of antenna ports in a scheduled bandwidth are continuous; or
a part of locations of subcarriers corresponding to any group of antenna ports in a scheduled bandwidth are continuous, and the other part of the locations are discontinuous.

51. The apparatus according to claim 49 or 50, wherein subcarriers corresponding to any two antenna ports in a group of antenna ports do not overlap; or subcarriers corresponding to any two antenna ports in a group of antenna ports are the same.

52. The apparatus according to any one of claims 49 to 51, wherein the processing module is further configured to perform discrete Fourier transform DFT on an m<sup>th</sup> group of modulation symbols.

53. The apparatus according to claim 52, wherein a size of the DFT is a quantity of symbols in the m<sup>th</sup> group of modulation symbols.

54. The apparatus according to any one of claims 49 to 53, wherein M is greater than or equal to a quantity of groups of antenna ports, and M is less than or equal to a sum of quantities of antenna ports in the groups of antenna ports.

55. The apparatus according to any one of claims 49 to 54, wherein the apparatus further comprises:
a receiving module, configured to receive indication information, wherein the indication information is for determining the precoding matrix.

56. The apparatus according to claim 55, wherein the indication information comprises:

a precoding matrix index, wherein the precoding matrix index indicates a precoding matrix in a precoding matrix set, and the precoding matrix set comprises a precoding matrix for diversity transmission and a precoding matrix for non-diversity transmission;
a precoding matrix index and a diversity transmission indication; or
a precoding matrix index and an identifier of a precoding matrix set, wherein a precoding matrix in the identified precoding matrix set is for diversity transmission.

57. The apparatus according to any one of claims 49 to 56, wherein the processing module is further configured to perform first-level precoding on v groups of modulation symbols, wherein a size of a precoding matrix for first-level precoding is v*v, and an element in the precoding matrix for first-level precoding is 0 and/or 1.

58. The apparatus according to claim 57, wherein the precoding matrix for first-level precoding is a block diagonal matrix or a block anti-diagonal matrix.

59. The apparatus according to claim 58, wherein a block in the block diagonal matrix is a unit matrix, and both a quantity of rows and a quantity of columns in the unit matrix are a quantity of antenna ports in a group of antenna ports.

60. The apparatus according to any one of claims 49 to 59, wherein the processing module is further configured to generate a modulation symbol by using the following formula:

$$d(i) = \frac{e^{j\frac{\pi}{2}\left(\left\lfloor\frac{i}{M}\right\rfloor mod\, 2\right)}}{\sqrt{2}}\left(\left(1 - 2b(i)\right) + j\left(1 - 2b(i)\right)\right),$$

wherein b represents a bit sequence, b(i) is an i<sup>th</sup> bit in the bit sequence, i is an integer greater than or equal to 0, d(i) is a modulation symbol corresponding to $b(i)$, $\lfloor i/M \rfloor$ represents rounding down i/M to the nearest integer, and j is an imaginary part.

61. The apparatus according to claim 60, wherein the processing module is further configured to filter out the first L1 symbols and/or the last L2 symbols in the m<sup>th</sup> group of modulation symbols, wherein L1 is an integer greater than or equal to 1, and L2 is an integer greater than or equal to 1.

62. The apparatus according to claim 61, wherein the apparatus further comprises:
the receiving module, configured to receive indication information, wherein the indication information indicates a truncation factor, and a value of L1 and a value of L2 are both determined based on the truncation factor.

63. A communication apparatus, comprising a processor and a memory, wherein

the memory is configured to store a computer program or instructions; and
the processor is configured to execute a part or all of the computer program or the instructions in the memory, and implement the method according to any one of claims 1 to 31 when the part or all of the computer program or the instructions are executed.

**64.** A chip system, wherein the chip system comprises a processing circuit, and the processing circuit is coupled to a storage medium, wherein
the processing circuit is configured to execute a part or all of a computer program or instructions in the storage medium, and implement the method according to any one of claims 1 to 31 when the part or all of the computer program or the instructions are executed.

**65.** A computer-readable storage medium, configured to store a computer program, wherein the computer program comprises instructions for implementing the method according to any one of claims 1 to 31.

**66.** A computer program product, wherein the computer program product comprises computer program code, and when the computer program code is run on a computer, the computer is enabled to perform the method according to any one of claims 1 to 31.

FIG. 1

Bits coded bits obtained after a transport block is coded

**Step 201**

Modulation modulation

**Step 202**

Discrete Fourier transform DFT

**Step 203**

Precoding precoding

**Step 204**

Small delay-cyclic delay diversity SD-CDD

**Step 205**

Subcarrier mapping subcarrier mapping

Subcarrier mapping subcarrier mapping

**Step 206**

Inverse fast Fourier transform IFFT+Cyclic prefix CP

Inverse fast Fourier transform IFFT+Cyclic prefix CP

Discrete Fourier transform-spread orthogonal frequency division multiplexing DFT-s-OFDM signal or OFDM signal

Discrete Fourier transform-spread orthogonal frequency division multiplexing DFT-s-OFDM signal or OFDM signal

FIG. 2

Bits coded bits obtained
after a transport block is
coded

Step 301

Modulation modulation

Sorting

A

Symbol grouping

B

Step 302

Group n modulation symbols into M groups of modulation
symbols

C                              C          Step 303

Discrete Fourier transform DFT        Discrete Fourier transform DFT

D                              D          Step 304

Add a preset symbol, that is, perform extension

E                              E          Step 305

Precoding

F                              F          Step 306

Subcarrier mapping                Subcarrier mapping

Inverse fast Fourier transform IFFT,        Inverse fast Fourier transform IFFT,
and cyclic prefix CP addition              and cyclic prefix CP addition

Discrete Fourier transform-spread        Discrete Fourier transform-spread
orthogonal frequency division            orthogonal frequency division
multiplexing DFT-s-OFDM signal          multiplexing DFT-s-OFDM signal

FIG. 3

FIG. 4a

FIG. 4b

FIG. 4c

FIG. 4d

FIG. 4e

FIG. 5a

FIG. 5b

C₁

B: n modulation
symbols

C₂

FIG. 5c

D₁    E₁

D₂    E₂

FIG. 6a

D₁    E₁

D₂    E₂

FIG. 6b

D₁    E₁

D₂    E₂

D₃    E₃

FIG. 6c

Virtual bandwidth

Truncation

Scheduled bandwidth

Filtering

Actual transmission
bandwidth or
schedulable bandwidth

FIG. 7

Step 802

Group n modulation symbols into M groups of modulation symbols

Step 803

Discrete Fourier transform DFT

...

Discrete Fourier transform DFT

Step 804

Second-level precoding

...

Second-level precoding

Step 805

Subcarrier mapping

...

Subcarrier mapping

Inverse fast Fourier transform IFFT, and cyclic prefix CP addition

Inverse fast Fourier transform IFFT, and cyclic prefix CP addition

Discrete Fourier transform-spread orthogonal frequency division multiplexing DFT-s-OFDM signal

Discrete Fourier transform-spread orthogonal frequency division multiplexing DFT-s-OFDM signal

FIG. 8

Diversity communication
apparatus 900

| Processing module 910 | Receiving module 920a | Sending module 920b |

Storage module 930

**FIG. 9**

Diversity communication
apparatus 1000

| Processor 1010 | Transceiver 1020 |

Memory 1030

**FIG. 10**

FIG. 11

## INTERNATIONAL SEARCH REPORT

| | |
|---|---|
| International application No. | |
| **PCT/CN2020/123023** | |

**A. CLASSIFICATION OF SUBJECT MATTER**

H04L 1/06(2006.01)i; H04B 7/06(2006.01)i

According to International Patent Classification (IPC) or to both national classification and IPC

**B. FIELDS SEARCHED**

Minimum documentation searched (classification system followed by classification symbols)

H04L H04W H04B

Documentation searched other than minimum documentation to the extent that such documents are included in the fields searched

Electronic data base consulted during the international search (name of data base and, where practicable, search terms used)

VEN, CNABS, USTXT, CNTXT, EPTXT, WOTXT, CNKI, CJFD, 3GPP: 分集, 多径衰落, 调制, 预编码, 符号, 扩展, 映射, 天线, 矩阵, 资源, diversity, multipath fading, modulate, precoding, symbol, spread, mapping, antenna, array, matrix, resource

**C. DOCUMENTS CONSIDERED TO BE RELEVANT**

| Category* | Citation of document, with indication, where appropriate, of the relevant passages | Relevant to claim No. |
|---|---|---|
| A | CN 104993852 A (JIANGSU ZTE WAVETONE SCINECE & TECHNOLOGY LTD.) 21 October 2015 (2015-10-21) entire document | 1-66 |
| A | CN 104243370 A (INSTITUTE OF INFORMATION ENGINEERING, CHINESE ACADEMY OF SCIENCES) 24 December 2014 (2014-12-24) entire document | 1-66 |
| A | CN 102916783 A (HUAWEI TECHNOLOGIES CO., LTD.) 06 February 2013 (2013-02-06) entire document | 1-66 |
| A | CN 101783723 A (BEIJING UNIVERSITY OF POSTS AND TELECOMMUNICATIONS) 21 July 2010 (2010-07-21) entire document | 1-66 |
| A | CN 106656292 A (CHINA ACADEMY OF TELECOMMUNICATIONS TECHNOLOGY) 10 May 2017 (2017-05-10) entire document | 1-66 |
| A | WO 2020204523 A1 (LG ELECTRONICS INC.) 08 October 2020 (2020-10-08) entire document | 1-66 |

☑ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 June 2021** | **09 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2020/123023** |

### C.    DOCUMENTS CONSIDERED TO BE RELEVANT

| Category* | Citation of document, with indication, where appropriate, of the relevant passages | Relevant to claim No. |
|---|---|---|
| A | US 10728074 B1 (GENGHISCOMM HOLDINGS LLC) 28 July 2020 (2020-07-28) entire document | 1-66 |
| A | US 2020169305 A1 (SUN PATENT TRUST) 28 May 2020 (2020-05-28) entire document | 1-66 |
| A | KR 20200086186 A (GLOBALDAON) 16 July 2020 (2020-07-16) entire document | 1-66 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 104993852 | A | 21 October 2015 | CN | 104993852 | B | 17 April 2018 |
| CN | 104243370 | A | 24 December 2014 | CN | 104243370 | B | 30 June 2017 |
| CN | 102916783 | A | 06 February 2013 | CN | 102916783 | B | 30 September 2015 |
| CN | 101783723 | A | 21 July 2010 | CN | 101783723 | B | 11 September 2013 |
| CN | 106656292 | A | 10 May 2017 | US | 2018316405 | A1 | 01 November 2018 |
| | | | | US | 10193609 | B2 | 29 January 2019 |
| | | | | CN | 106656292 | B | 31 March 2020 |
| | | | | WO | 2017071674 | A1 | 04 May 2017 |
| | | | | EP | 3370348 | A1 | 05 September 2018 |
| | | | | EP | 3370348 | A4 | 26 June 2019 |
| WO | 2020204523 | A1 | 08 October 2020 | | None | | |
| US | 10728074 | B1 | 28 July 2020 | US | 10243773 | B1 | 26 March 2019 |
| | | | | US | 10447520 | B1 | 15 October 2019 |
| | | | | US | 10505774 | B1 | 10 December 2019 |
| US | 2020169305 | A1 | 28 May 2020 | US | 9401776 | B2 | 26 July 2016 |
| | | | | US | 9136927 | B2 | 15 September 2015 |
| | | | | US | 8948305 | B2 | 03 February 2015 |
| | | | | US | 2012121034 | A1 | 17 May 2012 |
| | | | | US | 10454547 | B2 | 22 October 2019 |
| | | | | US | 2015349916 | A1 | 03 December 2015 |
| | | | | US | 2015103942 | A1 | 16 April 2015 |
| | | | | US | 2018138956 | A1 | 17 May 2018 |
| | | | | US | 2020021345 | A1 | 16 January 2020 |
| | | | | US | 10608716 | B2 | 31 March 2020 |
| | | | | US | 2016285529 | A1 | 29 September 2016 |
| | | | | US | 9893781 | B2 | 13 February 2018 |
| KR | 20200086186 | A | 16 July 2020 | | None | | |

Form PCT/ISA/210 (patent family annex) (January 2015)